(19) Europäisches Patentamt
European Patent Office
Office européen des brevets

(11) **EP 4 571 579 A1**

(12) **EUROPEAN PATENT APPLICATION**

(43) Date of publication:
**18.06.2025 Bulletin 2025/25**

(21) Application number: **24216795.5**

(22) Date of filing: **02.12.2024**

(51) International Patent Classification (IPC):
**G06N 3/0455** (2023.01)     **G06N 3/082** (2023.01)

(52) Cooperative Patent Classification (CPC):
**G06N 3/0455; G06N 3/082;** G06N 3/0495;
G06N 3/084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.12.2023 US 202363610357 P
04.10.2024 US 202418907470**

(71) Applicant: **Samsung Electronics Co., Ltd.
Suwon-si, Gyeonggi-do 16677 (KR)**

(72) Inventors:
• **MALLA, Srikanth
San Jose, CA, 95134 (US)**
• **CHOI, Chiho
San Jose, CA, 95134 (US)**
• **CHOI, Joon Hee
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **SYSTEMS AND METHODS OF DATA PROCESSING FOR MACHING LEARNING**

(57)     Provided are systems, methods, and apparatuses of data processing for machine learning. In one or more examples, the systems, devices, and methods include determining priority values for elements of a weight matrix based on a gradient of a loss function of an AI model and the weight matrix; determining an index value based on a number of elements in the weight importance matrix and a sparsity ratio; determining a threshold based on sorting the elements of the weight importance matrix in sequential order and determining a value of an element of the sorted weight importance matrix based on using the index value as an index of the sorted weight importance matrix; determining a pruned weights matrix based on the threshold; and processing a query using an updated AI model, the updated AI model being based on the pruned weights matrix being implemented in the AI model.

FIG. 5

EP 4 571 579 A1

## Description

### TECHNICAL FIELD

The disclosure relates generally to memory systems, and more particularly to systems and methods of data processing for machine learning.

### BACKGROUND

The present background section is intended to provide context only, and the disclosure of any concept in this section does not constitute an admission that said concept is prior art.

Artificial intelligence (AI) demands storage solutions that provide high throughput and low latency to accommodate rapid processing of relatively large datasets. High throughput ensures data can be read and written swiftly. Low latency guarantees quick data access, which is essential for real-time AI applications. However, the proliferation of AI has resulted in a rapid increase in demands for improvements in data movement bandwidths and data storage capacity, which has left data centers and related devices struggling to keep up with demand.

### SUMMARY

In some aspects, the techniques described herein relate to a device including: one or more processors; and memory storing instructions that, when executed by the one or more processors, cause the device to: determine priority values for elements of a weight matrix of a layer of an artificial intelligence (AI) model, the priority values being based on a gradient of a loss function of the AI model and the weight matrix, elements of a weight importance matrix including the priority values; determine an index value based on a number of elements in the weight importance matrix and a sparsity ratio; determine a threshold based on sorting the elements of the weight importance matrix in sequential order and determining a value of an element of the sorted weight importance matrix based on using the index value as an index of the sorted weight importance matrix; determine a pruned weights matrix based on the threshold; and process a query using an updated AI model, the updated AI model being based on the pruned weights matrix being implemented in the AI model.

In some aspects, the techniques described herein relate to a device, wherein determining priority values for elements of the weight matrix is based on the instructions, when executed by the one or more processors, further causing the device to: determine a sensitivity of an output of a function of the layer of the AI model to variations in at least one of weights of the AI model or inputs to the function; and determine the gradient of the loss function of the AI model based on the sensitivity of the output of the function.

In some aspects, the techniques described herein relate to a device, wherein: the variations in inputs to the function are included in an input variation matrix, the variations in the weights of the AI model are included in a weight variation matrix, a size of the weight variation matrix matches a size of the weight matrix and a size of the input variation matrix, and the weight variation matrix is a full rank matrix.

In some aspects, the techniques described herein relate to a device, wherein, based on the layer being non-linear, the gradient of the loss function is based on a pseudoinverse of the variations in the weights of the AI model.

In some aspects, the techniques described herein relate to a device, wherein, based on the layer being linear, the gradient of the loss function is based on the inputs to the function.

In some aspects, the techniques described herein relate to a device, wherein determining the pruned weights matrix based on the threshold is based on the instructions, when executed by the one or more processors, further causing the device to: generate a mask matrix based on comparing elements of the weight importance matrix to the threshold; and determine the pruned weights matrix based on applying the mask matrix to the weight matrix.

In some aspects, the techniques described herein relate to a device, wherein: the weight matrix includes weights of the layer of the AI model, and applying the mask matrix to the weight matrix is based on a dot product of the mask matrix and the weight matrix.

In some aspects, the techniques described herein relate to a device, wherein the instructions, when executed by the one or more processors, further cause the device to: set elements of the weight importance matrix to zero based on the weight pruning being a first iteration, or set elements of the weight importance matrix to a second pruned weights matrix based on the weight pruning being a second iteration different from the first iteration.

In some aspects, the techniques described herein relate to a device, wherein, based on a determination that the index value includes a decimal number, using the index value as the index of the sorted weight importance matrix is based on the instructions, when executed by the one or more processors, further causing the device to: round the index value to a nearest integer greater than the decimal number; and use the rounded index value as the index of the sorted weight importance matrix.

In some aspects, the techniques described herein relate to a device, wherein: the AI model or the updated AI model includes a trained AI model, the sparsity ratio is a percentage value between zero percent and one hundred percent, and the index value is determined based a complement of the sparsity ratio.

In some aspects, the techniques described herein relate to a non-transitory computer-readable medium storing code that includes instructions executable by a processor to: determine priority values for elements of a weight matrix of a layer of an artificial intelligence (AI) model, the priority values being based on a gradient of a loss function of the AI model and the weight matrix, elements of a weight importance matrix including the priority values; determine an index value based on a number of elements in the weight importance matrix and a sparsity ratio; determine a threshold based on sorting the elements of the weight importance matrix in sequential order and determining a value of an element of the sorted weight importance matrix based on using the index value as an index of the sorted weight importance matrix; determine a pruned weights matrix based on the threshold; and process a query using an updated AI model, the updated AI model being based on the pruned weights matrix being implemented in the AI model.

In some aspects, the techniques described herein relate to a non-transitory computer-readable medium, wherein determining priority values for elements of the weight matrix is based on the code further causing the processor to: determine a sensitivity of an output of a function of the layer of the AI model to variations in at least one of weights of the AI model or inputs to the function; and determine the gradient of the loss function of the AI model based on the sensitivity of the output of the function.

In some aspects, the techniques described herein relate to a non-transitory computer-readable medium, wherein: the variations in inputs to the function are included in an input variation matrix, the variations in the weights of the AI model are included in a weight variation matrix, a size of the weight variation matrix matches a size of the weight matrix and a size of the input variation matrix, and the weight variation matrix is a full rank matrix.

In some aspects, the techniques described herein relate to a non-transitory computer-readable medium, wherein, based on the layer being non-linear, the gradient of the loss function is based on a pseudoinverse of the variations in the weights of the AI model.

In some aspects, the techniques described herein relate to a non-transitory computer-readable medium, wherein, based on the layer being linear, the gradient of the loss function is based on the inputs to the function.

In some aspects, the techniques described herein relate to a non-transitory computer-readable medium, wherein determining the pruned weights matrix based on the threshold is based on the code further causing the processor to: generate a mask matrix based on comparing elements of the weight importance matrix to the threshold; and determine the pruned weights matrix based on applying the mask matrix to the weight matrix.

In some aspects, the techniques described herein relate to a non-transitory computer-readable medium, wherein: the weight matrix includes weights of the layer of the AI model, and applying the mask matrix to the weight matrix is based on a dot product of the mask matrix and the weight matrix.

In some aspects, the techniques described herein relate to a method of weight pruning, the method including: determining priority values for elements of a weight matrix of a layer of an artificial intelligence (AI) model, the priority values being based on a gradient of a loss function of the AI model and the weight matrix, elements of a weight importance matrix including the priority values; determining an index value based on a number of elements in the weight importance matrix and a sparsity ratio; determining a threshold based on sorting the elements of the weight importance matrix in sequential order and determining a value of an element of the sorted weight importance matrix based on using the index value as an index of the sorted weight importance matrix; determining a pruned weights matrix based on the threshold; and processing a query using an updated AI model, the updated AI model being based on the pruned weights matrix being implemented in the AI model.

In some aspects, the techniques described herein relate to a method, wherein determining priority values for elements of the weight matrix includes: determining a sensitivity of an output of a function of the layer of the AI model to variations in at least one of weights of the AI model or inputs to the function; and determining the gradient of the loss function of the AI model based on the sensitivity of the output of the function.

In some aspects, the techniques described herein relate to a method, wherein: the variations in inputs to the function are included in an input variation matrix, the variations in the weights of the AI model are included in a weight variation matrix, a size of the weight variation matrix matches a size of the weight matrix and a size of the input variation matrix, and the weight variation matrix is a full rank matrix.

A computer-readable medium is disclosed. The computer-readable medium can store instructions that, when executed by a computer, cause the computer to perform substantially the same or similar operations as described herein are further disclosed. Similarly, non-transitory computer-readable media, devices, and systems for performing substantially the same or similar operations as described herein are further disclosed.

The systems and methods described herein include multiple advantages and benefits. For example, the systems and methods reduce energy consumption and improve resource utilization of compute resources. Also, the systems and methods minimize performance degradations based on previous datasets. The systems and methods provide improvement of AI model performance based on previous datasets. The systems and methods avoid or minimize storing old datasets, reducing memory usage. The systems and methods improve the continual evolution of AI models and machine learning. Also, the system and methods avoid the training of parameters and/or updating of parameters based on improved masking of the weights. The systems and methods provide faster weight pruning mechanisms, while avoiding the forgetting and/or distorting of older machine learning from previous datasets. The systems and methods may provide sample efficient mechanisms of weight pruning, using relatively few samples from the calibration set of a dataset.

**BRIEF DESCRIPTION OF THE DRAWINGS**

The above-mentioned aspects and other aspects of the present systems and methods will be better understood when the present application is read in view of the following figures in which like numbers indicate similar or identical elements. Further, the drawings provided herein are for purpose of illustrating certain embodiments only; other embodiments, which may not be explicitly illustrated, are not excluded from the scope of this disclosure.

These and other features and advantages of the present disclosure will be appreciated and understood with reference to the specification, claims, and appended drawings wherein:

FIG. 1 illustrates an example system in accordance with one or more implementations as described herein.
FIG. 2 illustrates details of the system of FIG. 1, according to one or more implementations as described herein.
FIG. 3 illustrates an example system in accordance with one or more implementations as described herein.
FIG. 4 illustrates an example graph in accordance with one or more implementations as described herein.
FIG. 5 depicts a flow diagram illustrating an example method associated with the disclosed systems, in accordance with example implementations described herein.
FIG. 6 depicts a flow diagram illustrating an example method associated with the disclosed systems, in accordance with example implementations described herein.
FIG. 7 depicts a flow diagram illustrating an example method associated with the disclosed systems, in accordance with example implementations described herein.

While the present systems and methods are susceptible to various modifications and alternative forms, specific embodiments thereof are shown by way of example in the drawings and will herein be described. The drawings may not be to scale. It should be understood, however, that the drawings and detailed description thereto are not intended to limit the present systems and methods to the particular form disclosed, but to the contrary, the intention is to cover all modifications, equivalents, and alternatives falling within the spirit and scope of the present systems and methods as defined by the appended claims.

**DETAILED DESCRIPTION OF VARIOUS EMBODIMENTS**

The details of one or more embodiments of the subject matter described herein are set forth in the accompanying drawings and the description below. Other features, aspects, and advantages of the subject matter will become apparent from the description, the drawings, and the claims.

Various embodiments of the present disclosure now will be described more fully hereinafter with reference to the accompanying drawings, in which some, but not all embodiments are shown. Indeed, the disclosure may be embodied in many forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Like numbers refer to like elements throughout. Arrows in each of the figures depict bi-directional data flow and/or bi-directional data flow capabilities. The terms "path," "pathway" and "route" are used interchangeably herein.

Embodiments of the present disclosure may be implemented in various ways, including as computer program products that comprise articles of manufacture. A computer program product may include a non-transitory computer-readable storage medium storing applications, programs, program components, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In one embodiment, a non-volatile computer-readable storage medium may include a floppy disk, flexible disk, hard disk, solid-state storage (SSS) (for example a solid-state drive (SSD)), solid state card (SSC), solid state module (SSM), enterprise flash drive, magnetic tape, or any other non-transitory magnetic medium, and/or the like. A non-volatile computer-readable storage medium may include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may include read-only memory (ROM), programmable read-only memory (PROM), erasable programmable read-only memory (EPROM), electrically erasable programmable read-only memory (EEPROM), flash memory (for example Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In one embodiment, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory component (RIMM), dual in-line memory component (DIMM), single in-line memory component (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may take the form of an entirely hardware embodiment, an entirely computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially, such that one instruction is retrieved, loaded, and executed at a time. In some example embodiments, retrieval, loading, and/or execution may be performed in parallel, such that multiple instructions are retrieved, loaded, and/or executed together. Thus, such embodiments can produce specifically configured machines performing the steps or operations specified in the block diagrams and flowchart illustrations. Accordingly, the block diagrams and flowchart illustrations support various combinations of embodiments for performing the specified instructions, operations, or steps.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not be necessarily all referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. Similarly, various waveforms and timing diagrams are shown for illustrative purpose only. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on chip (SoC), an assembly, and so forth.

The systems and methods described herein may include and/or may be based on artificial intelligence (AI). AI can include the concept of creating intelligent machines that can sense, reason, act, and adapt. Machine learning (ML) can include a subset of AI that helps build AI-driven applications. The systems and methods described herein may include and/or may be based on large language models (LLMs). LLMs may use statistical models to analyze large amounts of data, learning the patterns and connections between words and phrases. The systems and methods described herein may include and/or may be based on neural networks. A neural network can include a machine learning process that uses interconnected nodes, or neurons, in a layered structure to teach computers to process data in a way inspired by the human brain. This type of machine learning may be referred to as deep learning. The systems and methods described may include and/or may be based on datasets. A dataset in machine learning and artificial intelligence can refer to a collection of data that is used to train and/or test algorithms and models. In some cases, datasets may be used to determine the importance of weights of a given AI model.

Some systems that implement pruning may be optimized for a calibrated dataset and may struggle with adaptability to datasets that differ from the calibrated dataset (e.g., non-calibrated datasets). The systems and methods described herein can continually prune datasets without having to use previous or older datasets (e.g., paradigm of lifelong or continual learning), and do so without losing performance on the previous or older datasets. It is noted that pruning with calibration datasets can perform well on calibrated datasets, while performing poorly on other datasets (e.g., non-calibrated datasets). The systems and methods provide mechanisms (e.g., algorithms) that provide a memory state for the importance of AI model weights based on a pruning mask that is determined according to the continual pruning systems and methods described herein. In some cases, the pruning mask can be updated (e.g., continually updated) in a process of continual pruning, which helps retain performance on previous or older datasets. Based on the systems and methods described, transformer layers may be sequentially sparsified, significantly reducing memory requirements. In some cases, implementations may be conducted in a single step, without fine-tuning, similar to post-training quantization and pruning of larger models. For calibration, the systems and methods may use a subset of segments (e.g., 16 segments of 2048 tokens each), randomly chosen from a shard (e.g., the first shard) of each dataset.

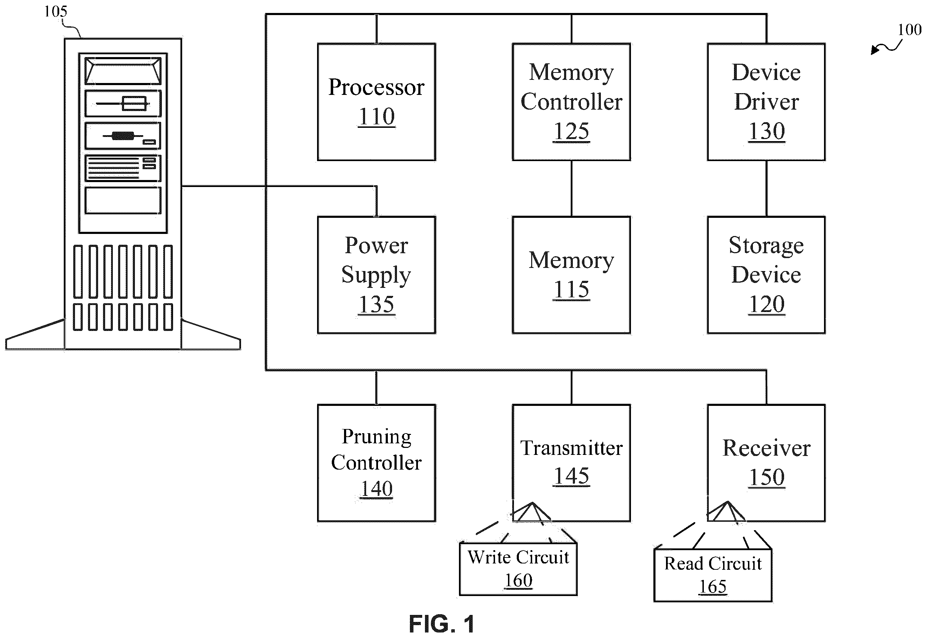

**FIG. 1** illustrates an example system 100 in accordance with one or more implementations as described herein. In FIG. 1, machine 105, which may be termed a host, a system, or a server, is shown. While FIG. 1 depicts machine 105 as a tower computer, embodiments of the disclosure may extend to any form factor or type of machine. For example, machine 105 may be a rack server, a blade server, a desktop computer, a tower computer, a mini tower computer, a desktop server, a laptop computer, a notebook computer, a tablet computer, etc.

Machine 105 may include processor 110, memory 115, and storage device 120. Processor 110 may be any variety of processor. It is noted that processor 110, along with the other components discussed below, are shown outside the machine for ease of illustration: embodiments of the disclosure may include these components within the machine. While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM), Phase Change Memory (PCM), or Resistive Random-Access Memory (ReRAM). Memory 115 may include volatile and/or non-volatile memory. Memory 115 may use any desired form factor: for example, Single In-Line Memory Module (SIMM), Dual In-Line Memory Module (DIMM), Non-Volatile DIMM (NVDIMM), etc. Memory 115 may be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may support an operating system under which various applications may be running. These applications may issue requests (which may be termed commands) to read data from or write data to either memory 115 or storage device 120. When storage device 120 is used to support applications reading or writing data via some sort of file system, storage device 120 may be accessed using device driver 130. While FIG. 1 shows one storage device 120, there may be any number (one or more) of storage devices in machine 105. Storage device 120 may support any desired protocol or protocols, including, for example, the Non-Volatile Memory Express (NVMe) protocol, a Serial Attached Small Computer System Interface (SCSI) (SAS) protocol, or a Serial AT Attachment (SATA) protocol. Storage device 120 may include any desired interface, including, for example, a Peripheral Component Interconnect Express (PCIe) interface, or a Compute Express Link (CXL) interface. Storage device 120 may take any desired form factor, including, for example, a U.2 form factor, a U.3 form factor, a M.2 form factor, Enterprise and Data Center Standard Form Factor (EDSFF) (including all of its varieties, such as E1 short, E1 long, and the E3 varieties), or an Add-In Card (AIC).

While FIG. 1 uses the term "storage device," embodiments of the disclosure may include any storage device formats that may benefit from the use of computational storage units, examples of which may include hard disk drives, Solid State Drives (SSDs), or persistent memory devices, such as PCM, ReRAM, or MRAM. Any reference to "storage device" "SSD" below should be understood to include such other embodiments of the disclosure and other varieties of storage devices. In some cases, the term "storage unit" may encompass storage device 120 and memory 115.

Machine 105 may include power supply 135. Power supply 135 may provide power to machine 105 and its components. Machine 105 may include transmitter 145 and receiver 150. Transmitter 145 or receiver 150 may be respectively used to transmit or receive data (e.g., AI model data, data of weight pruning processes described herein, etc.). In some cases, transmitter 145 and/or receiver 150 may be used to communicate with memory 115 and/or storage device 120. Transmitter 145 may include write circuit 160, which may be used to write data into storage, such as a register, in memory 115 and/or storage device 120. In a similar manner, receiver 150 may include read circuit 165, which may be used to read data from storage, such as a register, from memory 115 and/or storage device 120.

In one or more examples, machine 105 may be implemented with any type of apparatus. Machine 105 may be configured as (e.g., as a host of) one or more of a server such as a compute server, a storage server, storage node, a network server, a supercomputer, data center system, and/or the like, or any combination thereof. Additionally, or alternatively, machine 105 may be configured as (e.g., as a host of) one or more of a computer such as a workstation, a personal computer, a tablet, a smartphone, and/or the like, or any combination thereof. Machine 105 may be implemented with any type of apparatus that may be configured as a device including, for example, an accelerator device, a storage device, a network device, a memory expansion and/or buffer device, a central processing unit (CPU), a graphics processing unit (GPU), a neural processing unit (NPU), a tensor processing unit (TPU), optical processing units (OPU), and/or the like, or any combination thereof.

Any communication between devices including machine 105 (e.g., host, computational storage device, and/or any intermediary device) can occur over an interface that may be implemented with any type of wired and/or wireless communication medium, interface, protocol, and/or the like including PCIe, NVMe, Ethernet, NVMe-oF, Compute Express Link (CXL), and/or a coherent protocol such as CXL.mem, CXL.cache, CXL.IO and/or the like, Gen-Z, Open Coherent Accelerator Processor Interface (OpenCAPI), Cache Coherent Interconnect for Accelerators (CCIX), Advanced eXtensible Interface (AXI) and/or the like, or any combination thereof, Transmission Control Protocol/Internet Protocol (TCP/IP), FibreChannel, InfiniBand, Serial AT Attachment (SATA), Small Computer Systems Interface (SCSI), Serial Attached SCSI (SAS), iWARP, any generation of wireless network including 2G, 3G, 4G, 5G, and/or the like, any generation of Wi-Fi, Bluetooth, near-field communication (NFC), and/or the like, or any combination thereof. In some embodiments, the communication interfaces may include a communication fabric including one or more links, buses, switches, hubs, nodes, routers, translators, repeaters, and/or the like. In some embodiments, system 100 may include one or more additional apparatus having one or more additional communication interfaces.

Any of the functionality described herein, including any of the host functionality, device functionally, pruning controller 140 functionality, and/or the like, may be implemented with hardware, software, firmware, or any combination thereof including, for example, hardware and/or software combinational logic, sequential logic, timers, counters, registers, state machines, volatile memories such as at least one of or any combination of the following: dynamic random access memory (DRAM) and/or static random access memory (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application specific integrated circuits (ASICs) CPUs including complex instruction set computer (CISC) processors such as x86 processors and/or reduced instruction set computer (RISC) processors such as RISC-V and/or ARM processors), GPUs, NPUs, TPUs, OPUs, and/or the like, executing instructions stored in any type of memory. In some embodiments, one or more components of pruning controller 140 may be implemented as an SoC.

In some examples, pruning controller 140 may include any one or combination of logic (e.g., logical circuit), hardware (e.g., processing unit, memory, storage), software, firmware, and the like. In some cases, pruning controller 140 may perform one or more functions in conjunction with processor 110. In some cases, at least a portion of pruning controller 140 may be implemented in or by processor 110 and/or memory 115. The one or more logic circuits of pruning controller 140 may include any one or combination of multiplexers, registers, logic gates, arithmetic logic units (ALUs), cache, computer memory, microprocessors, processing units (CPUs, GPUs, NPUs, and/or TPUs), FPGAs, ASICs, etc., that enable pruning controller 140 to provide systems and methods of data processing for machine learning.

In one or more examples, pruning controller 140 may provide continual pruning in large language models. In one or more examples, pruning controller 140 may reduce energy consumption and improve resource utilization of compute resources. Also, pruning controller 140 may may minimize performance degradations based on previous datasets. The pruning controller 140 may provide improvement of AI model performance based on previous datasets. The pruning controller 140 may avoid or minimize storing old datasets, reducing memory usage. The pruning controller 140 may improve the continual evolution of AI models and machine learning. Also, pruning controller 140 may avoid the training of parameters and/or updating of parameters based on improved masking of the weights. The pruning controller 140 may provide faster weight pruning mechanisms, while avoiding the forgetting and/or distorting of older machine learning from previous datasets. The pruning controller 140 may provide sample efficient mechanisms of weight pruning, using relatively few samples from the calibration set of a dataset

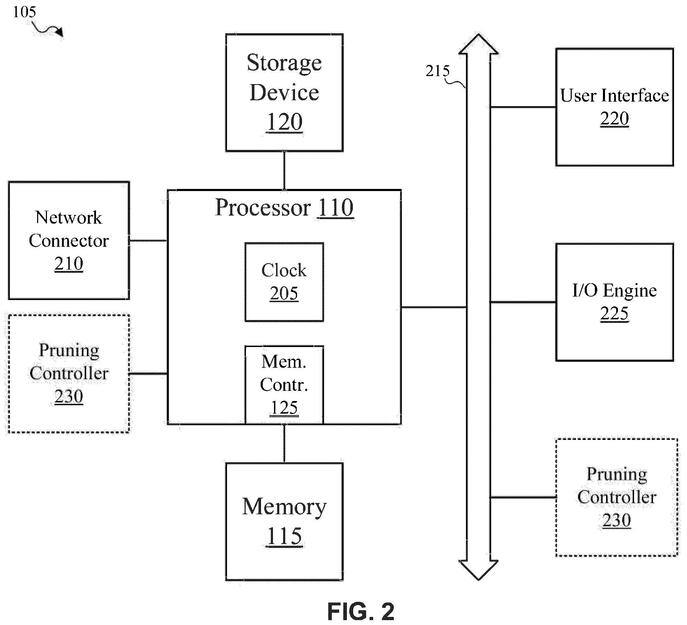

FIG. 2 illustrates details of machine 105 of FIG. 1, according to examples described herein. In the illustrated example, machine 105 may include one or more processors 110, which may include memory controllers 125 and clocks 205, which may be used to coordinate the operations of the components of the machine. Processors 110 may be coupled to memories 115, which may include random access memory (RAM), read-only memory (ROM), or other state preserving media, as examples. Processors 110 may be coupled to storage devices 120, and to network connector 210, which may be, for example, an Ethernet connector or a wireless connector. Processors 110 may be connected to buses 215, to which may be attached user interfaces 220 and Input/Output (I/O) interface ports that may be managed using I/O engines 225, among other components. As shown, processors 110 may be coupled to pruning controller 230, which may be an example of pruning controller 140 of FIG. 1. Additionally, or alternatively, processors 110 may be connected to buses 215, to which may be attached pruning controller 230

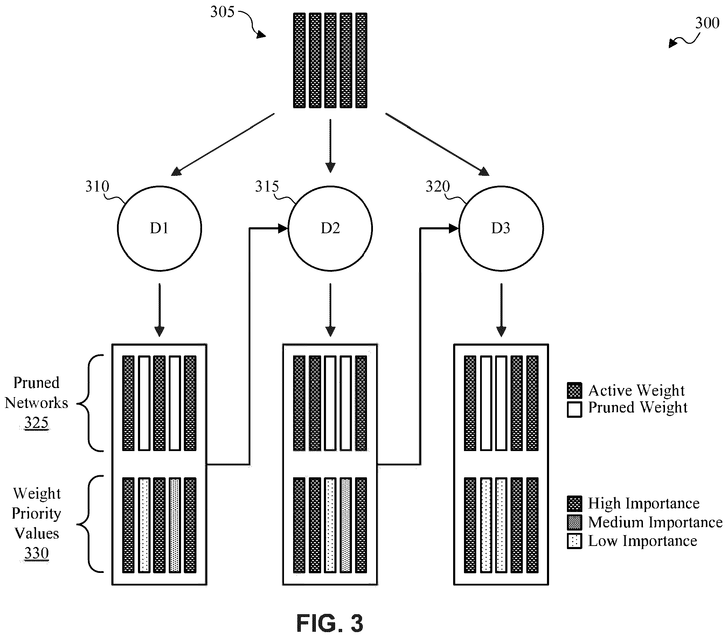

FIG. 3 illustrates an example system 300 in accordance with one or more implementations as described herein. In some examples, one or more aspects of system 300 may be based on machine 105. In some cases, one or more operations of system 300 may be performed based on at least one component of machine 105. For example, processor 110 may execute code to perform one or more operations of system 300; memory 115 and/or storage device 120 may store data associated with one or more operations of system 300; memory controller 125 may control data movement for one or more operations of system 300, etc.

In the illustrated example, system 300 includes a dense network 305. As shown, system 300 may include dataset 310, dataset 315, and dataset 320. Dense network 305 may represent a neural network of an AI model (e.g., one or more neural networks of at least one AI model). In some cases, dense network 305 may considered dense based on the weights of the neural network not having been pruned. In some cases, performance of the dense network 305 based on dataset 310, dataset 315, and/or dataset 320 may serve as a baseline for performance of neural networks that have had weights pruned based on the systems and methods described herein.

In the illustrated example, system 300 may include pruned networks 325 of dataset 310, dataset 315, and dataset 320. As shown, pruned networks 325 may depict networks with active weights and networks with pruned weights. In the illustrated example, system 300 may include weight priority values 330 (e.g., importance values, values indicating importance of weights, significance values, weight impact scores, etc.) for the pruned networks 325. Weight priority values 330 may indicate the importance of respective weights, a first weight importance value indicating the importance of a first weight, a second weight importance value indicating the importance of a second weight, and so on. In the illustrated example, weight priority values 330 may indicate weight values of high importance, medium importance, low importance, etc. In some cases, weight priority values may include values that range from a maximum to a minimum (e.g., integers and/or decimal values that range from 100 to 0; from 10 to 0, etc.). Unlike other pruning systems, the performance of an AI model impolemented on dataset 310, dataset 315, and dataset 320 and based on pruned networks 325 that are pruned based on the systems and methods described herein approaches the performance of dense network 305.

The performance of dense (no pruning) models (e.g., dense network 305) sets a performance baseline, indicating optimal performance without any compromise due to pruning or memory-saving techniques. In the LLAMA-7B model, the dense configuration yields an average perplexity (PPL) of 7.714. This benchmark is slightly lower in the LLAMA-30B and LLAMA-65B models, with average PPLs of 6.131 and 6.139, respectively. These variations suggest a nuanced impact of model scale on language processing capabilities, with larger models inherently capable of better performance pre-pruning.

Table 1 shows the effects of weight stasis and backward transfer on pruning techniques, tested with unstructured pruning with 0.5 or 50% sparsity ratio. Magnitude pruning is independent of calibration dataset.

**Table 1**

| Method | Sequential init. | Problem | Avg ppl | Avg BWT |
|---|---|---|---|---|
| magnitude | - | weight stasis | 30.245 | WS |
| SparseGPT | X | positive backward transfer | 10.166 | 0.591 |
| | ✓ | weight stasis | 10.156 | WS |
| Wanda | X | positive backward transfer | 9.990 | 0.569 |
| | ✓ | weight stasis | 10.326 | WS |

Table 1 demonstrates challenges in continual pruning, evaluating exiting methods based on using an LLM model (e.g., LLAMA-7B) with 50% sparsity. With sequential initialization, all baselines encounter weight stasis, which means pruned weights remain unchanged after a pruning process. In addition, higher average BWT of these methods implies that they have issues with forgetting (e.g., catastrophic forgetting), where the performance of the on the previously encountered dataset is increasing when pruning on the current dataset.

In calibration-guided pruning strategies, weight parameters may be pruned based on a particular metric, often derived from a calibration dataset. The systems and methods described minimize or avoid the effects of weight stasis, the phenomenon where pruned weights become unresponsive when transitioning from one dataset to another.

Another issue may arise when a system does not use sequential weight initialization. When pruning using new calibration dataset, the performance on the previous dataset may drop. Based on a given metric implemented (e.g., perplexity, accuracy, etc.), positive or negative backward transfer could result in different outcomes. Based on using perplexity as the metric, positive backward transfer of perplexity may mean a drop in performance.

Easing weight stasis by non-sequential weight initialization, calibration-based post-training pruning methods can be directly applied to continual settings. However, such systems can pose a significant challenge known as catastrophic forgetting. Catastrophic forgetting can be observed when pruned model weights are updated using a new calibration dataset, which deteriorates the performance on previously encountered datasets or tasks. Table 1 demonstrates challenges in continual pruning, evaluating exiting methods using LLM models with 50% sparsity ratio. With sequential initialization, all baselines encounter weight stasis, which means pruned weights remain the same. In addition, higher average backward transfer (BWT) of these methods implies that they have a forgetting issue, where the performance on the previously encountered dataset is increasing based on pruning on the current dataset.

The systems and methods described herein avoid or minimize the effects of weight stasis. The systems and methods provide continual pruning (e.g., of pruned networks 325) that addresses pruning under a continual model adaptation setting, bypassing the requirement for model re-training. At least some aspects of the systems and methods described herein may be referred to as COntinual Pruning in Adaptive Language (COPAL). Two common problems observed in continual pruning, weight stasis and forgetting, are addressed through the systems and methods described herein. The systems and methods significantly outperform other systems in Backward Transfer (BWT) reduction and Perplexity (PPL) performance, providing significant consistency and adaptability across various pruning structures, datasets, and models.

In some examples, the systems and methods may be implemented on trained AI models. The systems and methods simultaneously address issues (e.g., computational inefficiency and model inadaptability) based on post-training pruning. Based on optimizing LLMs without involving any further training or AI model fine-tuning, the systems and methods identify AI model weights that are relevant for previously encountered datasets (e.g., for all previously encountered datasets). The systems and methods include reducing the complexity and size of a given AI model (e.g., reducing dense network 305 to pruned networks 325 based on weight priority values 330).

The systems and methods may not require storing past datasets or reusing them for pruning. Instead, based on the systems and methods described, previously pruned networks with remaining parameters (e.g., pruned networks 325) may retain sufficient meta information to retain the performance for past datasets.

Upon transitioning to a new dataset, the systems and methods employ a small set of calibration data to guide the pruning process based on sensitivity analysis. Since the sensitivity analysis determines an AI model's robustness to perturbation caused by a new dataset, the systems and methods enable the AI model to seamlessly adapt to new information while preserving previous knowledge. The systems and methods provide continual pruning that addresses pruning under a continual model adaptation setting, bypassing the requirement for model re-training, providing a substantial advancement in the field of LLM optimization.

Continual pruning differs from pruning-enabled continual learning in its focus and methodology. Systems that prune under the continual learning may adopt pruning techniques to manage network complexity during training the model in a continually evolving environment. In contrast, the continual pruning described herein provides training-free weight pruning that can be implemented throughout the lifespan of a trained AI model. The continual pruning described herein dynamically adjusts which weights are relevant for all the encountered datasets, without the need to save all the past data or reuse them for pruning. Accordingly, the systems and methods ensure enhanced resource efficiency with preserved model's performance over time, regardless of the task or data evolution.

The systems and methods described herein may be based on Algorithm 1 below. It is noted that a left-pointing arrow may be equivalent to an equal sign in a given equation of Algorithm 1. In some cases, Algorithm 1 may be used to determine weight priority values 330 and obtain pruned networks 325 based on weight priority values 330. Algorithm 1 outlines a process of the systems and methods described herein, including identifying and pruning weights in a neural network model for continual learning scenarios. Algorithm 1 leverages the sensitivity analysis described herein to compute the importance of weights at each stage of a given AI model across multiple datasets.

**Algorithm 1** COPAL

**Input:** Weights $\mathbf{W}$, Sparsity ratio $s$,
Datasets $\mathcal{D}_1, \cdots, \mathcal{D}_k$,
using $j$-th input data from dataset $i$ the input
and output feature of the layer $f$ are $\left(\mathbf{x}_j^i, \mathbf{y}_j^i\right)$

**Output:** Pruned weights $\mathbf{W}_k^p$

**Initialize:** $\mathbf{W}_0^* = 0$

**for** $i = 1{:}k$ **do**

$S_{\mathbf{W}}^{ij} \leftarrow f(\mathbf{W} + \Delta\mathbf{W}, \mathbf{x}_j^i) - \mathbf{y}_j^i$

$S_{\mathbf{x}}^{ij} \leftarrow f(\mathbf{W}, \mathbf{x}_j^i + \Delta\mathbf{x}_j^i) - \mathbf{y}_j^i$

$d\mathbf{y}_j^i \leftarrow S_{\mathbf{W}}^{ij} + S_{\mathbf{x}}^{ij}$

$$\frac{\partial f}{\partial \mathbf{W}} \leftarrow \begin{cases} S_{\mathbf{W}}^{ij}\Delta\mathbf{W}^+, & \text{if } f \text{ is non-linear layer} \\ x, & \text{if } f \text{ is linear layer} \end{cases}$$

$\nabla_{d\mathbf{W}}\mathcal{L}_j^i \leftarrow 2d\mathbf{y}_j^i \frac{\partial f}{\partial \mathbf{W}}$

$\mathbf{W}_i^* \leftarrow \sum_j \left| \mathbf{W} \cdot \nabla_{d\mathbf{W}}\mathcal{L}_j^i \right| + \mathbf{W}_{i-1}^*$

$N \leftarrow$ total number of elements in $\mathbf{W}_i^*$

$\mathcal{T}_s \leftarrow$ Sorted $\mathbf{W}_i^* \left[\lceil (1 - s/100) \times N \rceil\right]$

$$\mathcal{M}_i \leftarrow \begin{cases} 0, & \text{if } w^i < \mathcal{T}_s, \ w^i \in \mathbf{W}_i^* \\ 1, & \text{otherwise} \end{cases}$$

$\mathbf{W}_i^p \leftarrow \mathbf{W}_i \cdot \mathcal{M}_i$

**end for**

**Return:** $\mathbf{W}_k^p$

The systems and methods may include and/or may be based on one or more derivatives. A derivative can include an operator that represents the rate of change of a function's output with respect to its input. A derivative can be described as the slope of a tangent line to a function's graph at a given point. The tangent line can include a straight line that touches the graph at that point and closely approximates the function nearby. For a straight line, the derivative can indicate the slope of the line. For a curve, the derivative can indicate the slope of any point along the curve. The derivative can be the instantaneous rate of change at a point on a curve. The derivative can be used to determine if a function is increasing or decreasing over certain intervals, and to find relative extrema. A directional derivative represents a rate of change of a function in any given direction.

The systems and methods may include and/or may be based on gradients. The gradient can indicate the direction of greatest change of a function of more than one variable. For example, the gradient can denote the direction of greatest change of a scalar function. The gradient of a scalar-valued differentiable function f of several variables can be the vector field (or vector-valued function) $\nabla f$ whose value at a point p gives the direction and the rate of fastest increase. The gradient can transform like a vector under change of basis of the space of variables of $f$. If the gradient of a function is non-zero at a point $\boldsymbol{p}$, the direction of the gradient can be the direction in which the function increases most quickly from $\boldsymbol{p}$, and the magnitude of the gradient can be the rate of increase in that direction (e.g., the greatest absolute directional derivative). The gradient can be used in a formula to calculate the directional derivative. The gradient of $f$ can be defined as the unique vector field whose dot product with any vector $\mathbf{v}$ at each point $\mathbf{x}$ is the directional derivative of $f$ along $\mathbf{v}$. That is, $(\nabla f(x) \cdot v = D_v f(x)$, where the right-hand side is the directional derivative.

The systems and methods may include and/or may be based on loss functions. A loss function can include a mathematical function that measures how well a machine learning algorithm or AI model is performing by evaluating the difference between the predicted output and the actual output. The loss function can be referred to as an error function.

The systems and methods may include and/or may be based on the squared Euclidean norm. The squared Euclidean norm, also known as the L2-squared, can include a function that calculates the distance between two vectors by adding the squared values of each vector. The distance can be any value between zero and infinity, with zero indicating that the vectors are identical and larger values indicating greater distance.

The systems and methods may include and/or may be based on dot products. Algebraically, the dot product may be defined as the sum of the products of corresponding entries of two sequences of numbers (e.g., two equal length sequence of numbers). Geometrically, the dot product may be the product of the Euclidean magnitudes of two vectors and the cosine of the angle between the two vectors.

The systems and methods may include and/or may be based on the rank of at least one matrix. The rank of a matrix A may be the dimension of the vector space generated (or spanned) by its columns, which may correspond to the maximal number of linearly independent columns of A. The maximal number of linearly independent columns of A, in turn, may be identical to the dimension of the vector space spanned by its rows. Thus, rank can be a measure of the non-degenerateness of the system of linear equations and linear transformation encoded by A. A given matrix may be said to have full rank if its rank equals the largest possible rank for a matrix of the same dimensions, which is the lesser of the number of rows and columns. A matrix may be said to be rank-deficient if it does not have full rank. The rank deficiency of a matrix is the difference between the lesser of the number of rows and columns, and the rank.

The systems and methods may include and/or may be based on the pseudoinverse of a matrix, which may be referred to as the Moore-Penrose inverse. The pseudoinverse of a matrix can be defined for complex matrices that are not square, and can have some but not all the properties of an ordinary inverse. The pseudoinverse can be used to find a "best fit" solution to a system of linear equations (e.g., linear equations that do not have a unique solution). Also, the pseudoinverse can be used to invert non-square matrices and to find a best-fit curve to data. The pseudoinverse may be unique for all matrices whose entries are real or complex numbers. The pseudoinverse (e.g., pseudoinverse A+ of a matrix A) can be computed using the singular value decomposition. In the special case where matrix A is a normal matrix (e.g., a Hermitian matrix), the pseudoinverse A+ annihilates the kernel of A and acts as a traditional inverse of A on the subspace orthogonal to the kernel. The systems and methods may include and/or may be based on singular value decomposition (SVD). SVD can include a linear algebra technique that breaks down a matrix into three component matrices, which can reveal the matrix's underlying structure and properties: rotation, rescaling, and another rotation.

The systems and methods described herein may include and/or may be based on pruning. Pruning can be used to balance system resource usage and AI model accuracy. Pruning can be performed before training, during training, and/or after training. Pruning can involve removing the least accurate or least valuable parameters from an AI model or neural network, such as weights, neurons, and/or layers. The goal of pruning is to make the network leaner and reduce its complexity and size. Pruning can include training a model to identify parts that can be removed, iteratively removing parts based on criteria such as weight magnitude, and retraining the model to recover any performance lost during pruning. Magnitude-based pruning can include removing the smallest weights. Structured pruning can include eliminating entire channels or filters, for example. SparseGPT pruning can include removing weights based on sparse regression. Some capabilities of LLMs in Natural Language Processing (NLP) may be offset by their large computational requirements. While some systems may use model quantization has been a primary focus for reducing these costs, the potential of pruning under incremental settings remains largely untapped. Embodiments described herein introduce novel algorithms designed to dynamically prune LLMs as they adapt to changing data landscapes. Unlike some pruning methods that are optimized for a specific dataset and struggle with adaptability, embodiments described herein allow for real-time model optimization without being tied to a fixed dataset. Empirical evaluations demonstrate that embodiments described herein not only maintain, but often improve the performance of pruned LLMs, all while significantly reducing their computational footprint. Embodiments described herein help fill a gap in the existing landscape of LLM optimization, offering a scalable and efficient avenue for model compression.

Some pruning methods often employ a subset of calibration data tailored for a specific dataset, limiting their adaptability to new or evolving data streams. In contrast, pruning under incremental settings offers a dynamic, real-time approach to model optimization that is not tied to a fixed dataset, making it particularly relevant for applications where data distributions may change over time. The challenge of adaptability becomes acute when LLMs are faced with changing data landscapes. Various pruning techniques, optimized for a particular dataset, may find it difficult to adapt to new data without a complete overhaul. This is not only computationally burdensome, but also impractical for applications requiring quick adaptability. Pruning under incremental settings, according to embodiments described herein, sidestep this issue by dynamically adjusting the model's architecture to accommodate new data, thereby maintaining its performance while simultaneously reducing its complexity.

The systems and methods may be implemented based on one or more frameworks (e.g., Pytorch framework), and may employ a one or more transformer libraries (e.g., Hugging Face Transformer library) for managing models and datasets. The systems and methods may be implemented on the layers (e.g., linear layers) of LLMs. In some cases, the systems and methods may exclude the initial embedding layer and the final classification head of an LLM model. In some cases, linear layers can constitute approximately 99% of the total parameters of a given LLM, which can make them a focus for pruning. Uniform sparsity may be maintained across all linear layers for consistency. The systems and methods may be applied in a layer-wise manner, facilitating scalability even in the context of relatively large models.

Magnitude pruning can include methods that effectively compresses models by removing weights with the smallest absolute values, which are deemed least impactful on a given network's output. In contrast, one or more embodiments may integrate sparsity into a post-training process of transformer-based models. The systems and methods may utilize the Hessian matrix to identify weights that can be pruned with minimal loss in performance, effectively making a given AI model sparse from the outset. In some embodiments, pruning may include analyzing weight and activation distributions. The systems and methods may include identifying and pruning network segments that minimally contribute to outputs.

The systems and methods described herein include logic to provide systems and methods of data processing for machine learning. The logic includes any combination of hardware (e.g., at least one memory, at least one processor), logical circuitry, firmware, and/or software to provide systems and methods of data processing for machine learning. The systems and methods described herein provide mechanisms to dynamically prune LLMs as they adapt to changing data landscapes. The systems and methods described herein include multiple advantages and benefits. For example, the systems and methods allow for real-time model optimization without being tied to a fixed dataset. The systems and methods reduce energy consumption and improved computational resource utilization. The systems and methods minimize performance degradation on previous datasets (e.g., pervious training datasets, previous analyzed datasets). The systems and methods avoid storing all the old datasets encountered, saving a considerable amount of memory, benefitting continual evolution of AI models and robot learning. The systems and methods avoid training parameters and updating parameter (e.g., based on determining masks for the weights). The systems and methods decrease training time and avoid forgetting or distorting older machine knowledge. The systems and methods are sample efficient, where relatively few samples are used for a calibration set from a dataset.

Embodiments described herein include systems and methods (e.g., algorithms) designed for pruning under incremental settings in the context of LLMs. Empirical evaluations demonstrate that embodiments described herein not only maintain but improve the performance of pruned LLMs as they adapt to new data streams in some cases. This may be achieved without the need for computationally intensive adjustments, filling a gap in the current landscape of LLM optimization techniques. Embodiments described herein provide scalable and efficient methods for model compression and serve as a foundation for systems targeting enhancing the adaptability and accessibility of large-scale models.

The systems and methods may include a pruning algorithm (e.g., a COPAL algorithm shown as Algorithm 1). For each dataset in the sequence $\boldsymbol{D_i}$, the sensitivity in output dyj may be calculated using sensitivity measures $S_w^{ij}, S_x^{ij}$. The gradient of the loss function $\nabla_{\mathrm{dw}} L_j^i$ may be computed using the output sensitivity $dy_j^i$ and the differential $\partial f/\partial W$. The importance of weights $W_i^*$ may be updated using the sensitivity metrics described herein. As the algorithm progresses through the dataset sequence, the algorithm may continually update the importance of weights and prune weights accordingly, resulting in an AI model that retains only those weights determined most important for its function across all datasets.

As shown, Algorithm 1 may include initializing a weight importance matrix $W_0^*$ to zero (e.g., for an initial iteration of Algorithm 1). It is noted that upon transitioning from dataset i to dataset $i + 1$ based on Algorithm 1, instead of initializing the weights to zero, the initialization of the weights may include initializing $W_{i+1}^* = W_i^p$ as the initial weight matrix (e.g., initialize the weight importance matrix to the result $W_i^p$ of the previous iteration of the pruning algorithm).

The systems and methods may include and/or may be based on continual neural network pruning. In some examples, Continual Pruning may include the sequential pruning of tasks without forgetting previously learned information. In this dynamic environment, a static, one-time pruning approach may be insufficient to avoid various problems of weight stasis or backward transfer. The systems a framework for continual neural network pruning based on sensitivity analysis to overcome the mentioned problems is also described, according to various embodiments described herein.

The systems and methods may include and/or may be based on continual sensitivity analysis. In a given layer of a neural network or AI model, the output y' may be computed as $\mathbf{y^i} = f(\mathbf{x^i}, \mathbf{W})$, where $f$ is the layer's function, $\mathbf{W}$ is the weight matrix, and $x_j^i$ i is the $j$-th input vector in dataset i. The concept of the total differential may be implemented to capture the local sensitivity of $\mathbf{y}$. The following equation may be used to determine the sensitivity of $\mathbf{y}$ to infinitesimal changes in $x_j^i$ and $\mathbf{W}$ (e.g., $d\mathbf{x}_j^i$ and $d\mathbf{W}$):

$$dy_j^i = \frac{\partial f}{\partial \mathbf{x}_j^i} d\mathbf{x}_j^i + \frac{\partial f}{\partial \mathbf{W}} d\mathbf{W}$$

This equation captures the local sensitivity of $\mathbf{y}$ as a function of $d\mathbf{x}$ and $d\mathbf{W}$, the infinitesimal variations in $\mathbf{x}$ and $\mathbf{W}$, respectively, where the rate of change of the output y' is determined based on the rate of change of the layer's function $f$ relative to the rate of change of the input $\mathbf{x}_j$ and the rate of change of the layer's function $f$ relative to the rate of change of the weight $\mathbf{W}$.

For some systems, the consideration of infinitesimal variations of $d\mathbf{x}_j^i$ and $d\mathbf{W}$ may be considered analytically intractable. Directly calculating the derivative can be computationally demanding and increase system latency, especially when $f(\mathbf{x}, \mathbf{W})$ is relatively complex. Therefore, instead of performing the derivative based on infinitesimal differences, the systems and methods may approximate the rate of change of the output $\mathbf{y^i}$ based on approximations of $d\mathbf{x}_j$ and $d\mathbf{W}$ (e.g., $\Delta\mathbf{W}$ and $\Delta\mathbf{x}_j^i$). Thus, the equation of the rate of change of the output $\mathbf{y^i}$ may be converted to the measure of sensitivity terms. The finite difference approximation of $\frac{\partial f}{\partial \mathbf{W}}$ may be determined based on the following equation:

$$\frac{\partial f}{\partial \mathbf{W}} \approx \frac{f(\mathbf{x}_j^i, \mathbf{W} + \Delta\mathbf{W}) - f(\mathbf{x}_j^i, \mathbf{W})}{\Delta\mathbf{W}}$$

Accordingly, a difference may be determined of the output based on a finite change in the weight and the output based on the weight without the finite change, where the finite difference approximation of $\frac{\partial f}{\partial \mathbf{W}}$ is based on this difference relative to the finite change in the weight. Thus, the systems and methods may provide the finite difference approximation of $\frac{\partial f}{\partial \mathbf{W}}$ and $\frac{\partial f}{\partial x_j^i}$ to determine the sensitivity of $\mathbf{y}$ with respect to $\mathbf{W}$ and sensitivity of $\mathbf{y}$ with respect to $\mathbf{x}_j^i$.

The systems and methods may include performing sensitivity analysis to determine a sensitivity of an output of an AI model in relation to variations (e.g., infinitesimal variations) to the weights and/or inputs of the AI model. The systems and methods may include a transition from a theoretical sensitivity analysis to a practical metric of determining the sensitivity.

In a given setting, the function $\mathbf{y} = f(\mathbf{x}, \mathbf{W})$ may represent the output of an AI model (e.g., neural network model) based on input $\mathbf{x}$ and parameter $\mathbf{W}$ (e.g., weight $\mathbf{W}$). The theoretical sensitivity $\mathbf{S}w$ for a given weight may be described by the following derivative:

$$\mathbf{S_W} = \frac{\partial f}{\partial \mathbf{W}} \times \Delta\mathbf{W}$$

This derivative can represent the instantaneous rate of change of $f$ with respect to $\mathbf{W}$ and serve as the theoretical measure of sensitivity. However, using the finite difference approximation for $\frac{\partial f}{\partial \mathbf{W}}$, a practical sensitivity metric $\mathbf{S_w}$ may be determined based on the following equation:

$$\mathbf{S_w} = \frac{f(\mathbf{x}, \mathbf{W} + \Delta\mathbf{W}) - f(\mathbf{x}, \mathbf{W})}{\Delta\mathbf{W}} \times \Delta\mathbf{W}$$

$$= f(\mathbf{x}, \mathbf{W} + \Delta\mathbf{W}) - f(\mathbf{x}, \mathbf{W})$$

$$= f(\mathbf{x}, \mathbf{W} + \Delta\mathbf{W}) - \mathbf{y}$$

The approximation of the sensitivity, $\mathbf{S_w}$, can serve as a computable substitute for the theoretical $\frac{\partial f}{\partial W} \times \Delta\mathbf{W}$. The approximated sensitivity provides a way to empirically evaluate the impact that a finite change in the parameter $\mathbf{W}$ (e.g., $\Delta\mathbf{W}$) has on the output the function $f$. It is noted that $\Delta\mathbf{W}$ may be some value relatively near zero compared to the value of $\mathbf{W}$. In some cases, $\Delta\mathbf{W}$ may be a fractional value of $\mathbf{W}$ (e.g., $\mathbf{W}/2$, $\mathbf{W}/5$, $\mathbf{W}/10$, $\mathbf{W}/100$, etc.). In some cases, $\Delta W$ may be percentage value of $\mathbf{W}$ (e.g., 10% of $\mathbf{W}$, 5% of $\mathbf{W}$, 1% of $\mathbf{W}$, 0.01% of $\mathbf{W}$, etc.).

By using the approximated sensitivity $\mathbf{S_w}$, a practical, computable implementation may be used instead of a theoretical implementation. The practical, computable metric can be used in various applications, including, but not limited to, network pruning, feature selection, model interpretation, and the like. Similarly, an approximation of the sensitivity of the input $\mathbf{x}$ may be determined based on the following equation:

$$\mathbf{S_x} = f(\mathbf{x} + \Delta\mathbf{x}, \mathbf{W}) - \mathbf{y}$$

The systems and methods described herein may include and/or may be based on quantitative measures for sensitivity in continual pruning. The sensitivity of $\mathbf{y}$ with respect to $\mathbf{W}$ may be determined based on the following equation:

$$S_\mathbf{W}^{ij} = \frac{\partial f}{\partial \mathbf{W}} \times \Delta\mathbf{W}$$

This derivative can represent the instantaneous rate of change of $f$ with respect to $\mathbf{W}$ and serves as a theoretical measure of sensitivity, where the sensitivity of $\mathbf{y}$ with respect to $\mathbf{W}$ is based on the rate of change of a given layer's function $f$ relative to the rate of change of the weight $\mathbf{W}$. Similarly, the sensitivity of $\mathbf{y}$ with respect to x may be determined based on the following equation:

$$S_\mathbf{x}^{ij} = \frac{\partial f}{\partial \mathbf{x}_j^i} \times \Delta\mathbf{x}_j^i$$

Based on the systems and methods described herein, the theoretical sensitivity (e.g., derivative-based sensitivity) may be approximated by altering $\mathbf{W}$ by a finite amount and observing its impact on y as follows:

$$\mathbf{S}_{\mathbf{w}}^{ij} = \frac{f(\mathbf{x}_j^i, \mathbf{W} + \Delta\mathbf{W}) - f(\mathbf{x}_j^i, \mathbf{W})}{\Delta\mathbf{W}} \times \Delta\mathbf{W}$$
$$= f(\mathbf{x}_j^i, \mathbf{W} + \Delta\mathbf{W}) - f(\mathbf{x}_j^i, \mathbf{W})$$
$$= f(\mathbf{x}_j^i, \mathbf{W} + \Delta\mathbf{W}) - \mathbf{y}_j^i$$

Accordingly, an approximated weight sensitivity metric $S_w^{ij}$ may be determined based on the following equation:

$$S_{\mathbf{W}}^{ij} = f(\mathbf{W} + \Delta\mathbf{W}, \mathbf{x}_j^i) - \mathbf{y}_j^i$$

Concurrently, the systems and methods may determine the impact of perturbations in **x** on **y** based on finite variations in **x,** where an approximated input sensitivity metric $S_x^{ij}$ may be determined based on the following equation:

$$S_{\mathbf{x}}^{ij} = f(\mathbf{W}, \mathbf{x}_j^i + \Delta\mathbf{x}_j^i) - \mathbf{y}_j^i$$

As indicated, $S_w^{ij}$ indicates the impact that perturbations in **W** have on y based on $\Delta$**W**, and $S_x^{ij}$ indicates the impact that perturbations in **x** have on **y** based on $\Delta$**x**. The sensitivity terms are effectively converted from a theoretical concept based on infinitesimal changes in **W** and x to practical metrics based on finite changes in **W** and x. With the combined sensitivity measures, a combined sensitivity metric d$\mathbf{y}_j^i$ may be determined based on the following equation:

$$d\mathbf{y}_j^i = S_{\mathbf{W}}^{ij} + S_{\mathbf{x}}^{ij}$$

The systems and methods described herein may include and/or may be based on loss functions. The loss function on the j-th input vector in dataset i may be defined as square of Euclidean norm of $dy^i_j$ as follows:

$$\mathcal{L}_j^i = \left\| dy_j^i \right\|_2^2$$

Based on the total differential $dy^i_j$, $L^i_j$ may be rewritten as follows:

$$\mathcal{L}_j^i = \left\| \frac{\partial f}{\partial \mathbf{x}_j^i} d\mathbf{x}_j^i + \frac{\partial f}{\partial \mathbf{W}} d\mathbf{W} \right\|_2^2$$

To determine the optimal perturbations in **W** that minimize $d$**y**, the gradient of $L^i_j$ may be computed with respect to $d$**W** as follows:

$$\nabla_{d\mathbf{W}} \mathcal{L}_j^i = 2d\mathbf{y}_j^i \frac{\partial f}{\partial \mathbf{W}}$$

By finding $\nabla_{d\mathbf{W}} L_j^i$, the output sensitivity's ($d\mathbf{y}_j^i$) loss function variation with respect to weight sensitivity ($d\mathbf{W}$) may be determined. In some cases, the systems and methods may include determining $\nabla'_{d\mathbf{W}} L^k$ to determine the sum of the absolute values of the individual gradients until dataset k as follows:

$$\nabla'_{d\mathbf{W}} \mathcal{L}^k = \sum_{i=0}^{k} \sum_j \left| \nabla_{d\mathbf{W}} \mathcal{L}_j^i \right|$$

$$= \sum_j 2 \left| d\mathbf{y}_j^k \frac{\partial f}{\partial \mathbf{W}} \right| + \sum_{i=0:k-1} \sum_j 2 \left| d\mathbf{y}_j^i \frac{\partial f}{\partial \mathbf{W}} \right|$$

$$= \sum_j 2 \left| d\mathbf{y}_j^k \right| \left| \frac{\partial f}{\partial \mathbf{W}} \right| + \nabla'_{d\mathbf{W}} \mathcal{L}_{k-1}$$

$$= \nabla'_{d\mathbf{W}} \tilde{\mathcal{L}}^k + \nabla'_{d\mathbf{W}} \mathcal{L}^{k-1},$$

where $\tilde{\mathcal{L}}^k$ is a loss function for only dataset k. This metric can be insightful for understanding how sensitive the loss is to each individual sample, without regard to the direction of that sensitivity (positive or negative). By focusing on the magnitude rather than the direction, a more nuanced view is provided of the model's robustness to perturbations in **W** and **x**.

A loss function $L_k$ may be used on datasets or tasks until k (e.g., to avoid forgetting the past dataset), which may be defined as the squared Euclidean norm of $d\mathbf{y}_j^i$ as follows:

$$\mathcal{L}_k = \sum_{i=0:k} \sum_j \left\| d\mathbf{y}_j^i \right\|_2^2$$

Substituting the expression for $d\mathbf{y}_j^i$ provides the following:

$$\mathcal{L}_k = \sum_{i=0:k} \sum_j \left\| \frac{\partial f}{\partial \mathbf{x}_j^i} d\mathbf{x}_j^i + \frac{\partial f}{\partial \mathbf{W}} d\mathbf{W} \right\|_2^2$$

To determine the optimal perturbations in **W** that would minimize d**y**, the gradient of the loss function Lk may be computed with respect to d**W**, denoted as $\nabla_{d\mathbf{W}} L_k$, as follows:

$$\nabla_{d\mathbf{W}} \mathcal{L}_k = \frac{\partial \mathcal{L}_k}{\partial d\mathbf{W}} = \sum_{i=0:k} \sum_j 2d\mathbf{y}_j^i \frac{\partial f}{\partial \mathbf{W}}$$

Based on determining the gradient of the loss function (e.g., the gradient of $\nabla_{d\mathbf{W}}L$) the loss function variation of the output sensitivity ($d\mathbf{y}$) with respect to weight sensitivity ($d\mathbf{W}$) may be determined.

It is noted that the gradient of the loss function, $\nabla'_{d\mathbf{W}}L_k$, may be implemented to capture the sum of the absolute values of the individual gradients for dataset k. This alternative metric can be insightful for understanding how sensitive the loss is to each individual sample, without regard to the direction of that sensitivity (e.g., positive or negative). By focusing on the magnitude rather than the direction, a more nuanced view of the model's robustness to perturbations in **W** and **x** may be provided. It is noted that $\tilde{L}_k$ is loss function for a given dataset k (e.g., only dataset k).

$$\nabla'_{d\mathbf{W}}\mathcal{L}_k = \sum_j 2\left|d\mathbf{y}_j^k\right|\left|\frac{\partial f}{\partial \mathbf{W}}\right| + \nabla'_{d\mathbf{W}}\mathcal{L}_{k-1}$$

$$= \left|\nabla_{d\mathbf{W}}\tilde{\mathcal{L}}_k\right| + \nabla_{d\mathbf{W}}\mathcal{L}_{k-1}$$

A local loss function L in its expanded form may be determined based on the following equation:

$$\mathcal{L} = \left(\frac{\partial f}{\partial \mathbf{x}}d\mathbf{x} + \frac{\partial f}{\partial \mathbf{W}}d\mathbf{W}\right)^T \left(\frac{\partial f}{\partial \mathbf{x}}d\mathbf{x} + \frac{\partial f}{\partial \mathbf{W}}d\mathbf{W}\right)$$

As indicated, the systems and methods may include determining the gradient of the loss function, $\nabla_{d\mathbf{W}}L$ (e.g., the gradient of L with respect to $d\mathbf{W}$). The systems and methods may include defining the term inside the squared norm of the loss function:

$$\mathbf{u} = \frac{\partial f}{\partial \mathbf{x}}d\mathbf{x} + \frac{\partial f}{\partial \mathbf{W}}d\mathbf{W}$$

Differentiating L with respect to $d\mathbf{W}$, and treating u as a function of $d\mathbf{W}$ and dx, the following relationship may be formed:

$$\frac{\partial \mathcal{L}}{\partial d\mathbf{W}} = 2\mathbf{u}\frac{\partial \mathbf{u}}{\partial d\mathbf{W}}$$

As described herein, the term u may be defined as follows:

$$\mathbf{u} = \frac{\partial f}{\partial \mathbf{x}}d\mathbf{x} + \frac{\partial f}{\partial \mathbf{W}}d\mathbf{W}$$

Considering each term in **u**, the following may be determined: (1) the term $\frac{\partial f}{\partial \mathbf{W}}d\mathbf{x}$ does not contain $d\mathbf{W}$, thus its derivative with respect to $d\mathbf{W}$ is zero; and (2) the term $\frac{\partial f}{\partial \mathbf{W}}d\mathbf{W}$ is directly dependent on $d\mathbf{W}$; (3) by differentiating, the following relationship may be used:

$$\frac{\partial \mathbf{u}}{\partial d\mathbf{W}} = 0 + \frac{\partial \left(\frac{\partial f}{\partial \mathbf{W}} d\mathbf{W}\right)}{\partial d\mathbf{W}}$$

Simplifying may result in the following relationship:

$$\frac{\partial \mathbf{u}}{\partial d\mathbf{W}} = \frac{\partial \left(\frac{\partial f}{\partial \mathbf{W}} \mathcal{K}\right)}{\partial \mathcal{K}}; \mathcal{K} = d\mathbf{W}$$

$$\frac{\partial \mathbf{u}}{\partial d\mathbf{W}} = \frac{\partial f}{\partial \mathbf{W}}$$

By substituting back **u**, the following relationship may be used:

$$\frac{\partial \mathcal{L}}{\partial d\mathbf{W}} = 2\left(\frac{\partial f}{\partial \mathbf{x}} d\mathbf{x} + \frac{\partial f}{\partial \mathbf{W}} d\mathbf{W}\right) \frac{\partial f}{\partial \mathbf{W}}$$

Since $\mathbf{u} = d y$ for simplification, the following relationship may be used:

$$\nabla_{d\mathbf{W}} \mathcal{L} = 2 d\mathbf{y} \frac{\partial f}{\partial \mathbf{W}}$$

Based on the systems and methods described, when $d\mathbf{W}$ is a small change in **W**, it can be thought of as $\Delta\mathbf{W}$, a relatively small, finite increment. In this framework, the derivative of this small change $\Delta\mathbf{W}$ with respect to **W** can be simply 1, or the identity matrix if **W** is a vector or matrix.

The systems and methods described may include and/or may be based on approximating a gradient of *f* with respect to **W.** Consider a function $f(\mathbf{W}, \mathbf{x})$ where W is a weight matrix of shape [M, D] and **x** is an input matrix of shape [N, D]. The systems and methods may include approximating the gradient of *f* with respect to **W,** denoted as $\frac{\partial f}{\partial \mathbf{W}}$ . Accordingly, a small perturbation $\Delta\mathbf{W}$ of shape [M, D] may be introduced to **W** and the change in *f* may be computed as $Sw = f(\mathbf{W} + \Delta\mathbf{W}, \mathbf{X}) - f(\mathbf{W}, \mathbf{X})$.

Given the following:

$$\nabla_{d\mathbf{W}} \mathcal{L}_k = \frac{\partial \mathcal{L}_k}{\partial d\mathbf{W}} = \sum_{i=0:k} \sum_{j} 2 d\mathbf{y}_j^i \frac{\partial f}{\partial \mathbf{W}}$$

the transition to an absolute value formulation may be considered. In some cases, the sum of the absolute values of individual gradients may be determined (e.g., not just their vector sum). This can reflect a focus on the magnitude of each term's contribution to the overall gradient, regardless of direction.

By taking the absolute value of each term in the summation, the equation may be transformed to reflect this emphasis on magnitude:

$$\nabla'_{d\mathbf{W}}\mathcal{L}_k = \sum_{i=0:k}\sum_j 2\left|d\mathbf{y}^i_j\frac{\partial f}{\partial \mathbf{W}}\right|$$

In some cases, the terms for the current dataset k may be separated from the previous datasets (up to $k$ - 1):

$$\nabla'_{d\mathbf{W}}\mathcal{L}_k = \sum_j 2\left|d\mathbf{y}^k_j\frac{\partial f}{\partial \mathbf{W}}\right| + \sum_{i=0:k-1}\sum_j 2\left|d\mathbf{y}^i_j\frac{\partial f}{\partial \mathbf{W}}\right|$$

Recognizing that the second term represents the sum of absolute values of gradients for all datasets up to $k$ - 1, the second term may be rewritten as $\nabla'_{d\mathbf{W}}L_{k-1}$. Accordingly, the following relationship may be formed:

$$\nabla'_{d\mathbf{W}}\mathcal{L}_k = \sum_j 2\left|d\mathbf{y}^k_j\right|\left|\frac{\partial f}{\partial \mathbf{W}}\right| + \nabla'_{d\mathbf{W}}\mathcal{L}_{k-1}$$

The directional derivative $D_v f$ of a function $f(\mathbf{x})$ along a direction v may be defined as:

$$D_{\mathbf{v}}f(\mathbf{x}) = \nabla f(\mathbf{x}) \cdot \mathbf{v}$$

where $\nabla f(\mathbf{x})$ is the gradient of $f$, thus the directional derivative may be based on the dot product of $\mathbf{v}$ and the gradient of $f$. The directional derivative can measure how much $f$ will change moving from $\mathbf{x}$ in the direction $\mathbf{v}$.

The magnitude of directional derivative $D$ of $L^i_j$ along $\mathbf{W}$ may be used as a measure of importance of weights denoted by $W^*_k$

$$\mathbf{W}^*_k = \sum_{i=0:k}\sum_j \left|D_{\mathbf{W}}\mathcal{L}^i_j\right|$$

$$= \sum_{i=0:k}\sum_j \left|\mathbf{W} \cdot \nabla_{d\mathbf{W}}\mathcal{L}^i_j\right|$$

$$= |\mathbf{W}| \cdot \sum_{i=0:k}\sum_j \left|\nabla_{d\mathbf{W}}\mathcal{L}^i_j\right|$$

$$= |\mathbf{W}| \cdot \nabla'_{d\mathbf{W}}\mathcal{L}^k$$

$$= |\mathbf{W}\cdot|\left(\nabla_{d\mathbf{W}}\tilde{\mathcal{L}}^k + \nabla'_{d\mathbf{W}}\mathcal{L}_{k-1}\right)$$

$$= \sum_j \left|\mathbf{W} \cdot \nabla_{d\mathbf{W}}\mathcal{L}^k_j\right| + \mathbf{W}^*_{k-1}.$$

This $W^*_k$ may serves as a measure of the importance or sensitivity of the weights W in affecting the loss function. A relatively high $W_k^*$ value may indicate that the loss function is highly sensitive to changes in the weights along the direction of W, making those weights of higher importance for the model's performance.

In some cases (e.g., when ΔW is not of full rank or is not square), the Moore-Penrose pseudoinverse may be used, denoted by ΔW⁺. The pseudoinverse can provide a least-squares approximation solution to the problem, and can be computed using singular value decomposition (SVD). It is noted that the approximation of $\frac{\partial f}{\partial W}$ may be determined as follows:

$$\frac{\partial f}{\partial \mathbf{W}} \approx S_{\mathbf{W}} \Delta \mathbf{W}^+$$

For a linear layer where $y_j^i = \mathbf{W} x_j^i$, then $\frac{\partial f}{\partial w} = x_j^i$ may be used to find the partial differential $\frac{\partial f}{\partial W}$. For other layers (e.g., non-linear layers), $\frac{\partial f}{\partial W}$ may be approximated based on the sensitivity of the output $y$ with respect to weights **W** and the pseudoinverse of ΔW (e.g., $S_w^{ij} \Delta W^+$). Accordingly, the gradient of the loss function may be based on $\frac{\partial f}{\partial W} = \mathbf{x}$ for a linear layer and $\frac{\partial f}{\partial W} = S_w^{ij} \Delta W^+$ for non-linear layer, where $S_w^{ij}$ may be based on the approximation of this weight sensitivity metric as indicated above.

Consider a function $y_j^i = f(W, x_j^i)$ where W is a matrix of shape [M, D] and $x_j^i$ is a matrix of shape [1, D]. To approximate the gradient of f with respect to W, denoted as $\frac{\partial f}{\partial W}$, the systems and methods may include introducing a small perturbation ΔW of shape [M, D] to W and computing the change in f as $S_W^{ij} = f(W + \Delta W, x_j^i) - f(W, x_j^i)$. Accordingly, the approximation of $\frac{\partial f}{\partial W}$ can be expressed based on the pseudoinverse of ΔW as follows:

$$\frac{\partial f}{\partial \mathbf{W}} \approx S_{\mathbf{W}}^{ij} \Delta \mathbf{W}^+$$

To ensure that Δ**W** is invertible, it may be configured as a full-rank matrix. A matrix is said to have full rank if its rank is equal to the minimum of its number of rows and number of columns (e.g., the minimum or lesser number of a 3 row by 2 column matrix is 2). Based on the systems and methods described, Δ**W** may have a rank of min(M, D).

The systems and methods may determine the importance of weights based on the following equation:

$$W_i^* = |W_i \cdot R_i|$$

where $W_i$ is a weight matrix whose elements are the values of the weights of an AI model, $R_i$ is scaling or ranking of the weights based on some criteria, and $W_i^*$ is a weight importance matrix, whose elements indicate the importance of corresponding weights of the weight matrix $W_i$. For example, a first element of $W_i^*$ (e.g., $w_1^*$) indicates the importance of a first element of $W_i$ (e.g., $w_1$), a second element of $W_i^*$ (e.g., $w_2^*$) indicates the importance of a second element of $W_i$ (e.g., $w_2$), and so on.

A threshold $T_s$ may be determined based on a selected or pre-determined level of sparsity (e.g., a default value, a value selected by a user), and a pruning mask $M_i$ is created to selectively prune weights that fall below this threshold.

In some cases, the threshold for sparsity ratio s% may be determined based on sorting a weight importance matrix (e.g., sorting in ascending order). The threshold may be determined based on the product of the complement of the sparsity ratio (e.g., 1 - s/100) and the number of elements of the weight importance matrix N as follows:

$$\text{Sorted } \boldsymbol{W}_i^* = \text{sort}(\boldsymbol{W}_i^*)$$

$$\text{threshold} = \text{Sorted } \boldsymbol{W}_i^* \left[ \left[ (1 - s/100) \times N \right] \right]$$

where $\boldsymbol{W}_i^*$ is a weight importance matrix (e.g., a matrix of elements that indicate the importance of each element of the weight matrix), s is the sparsity ratio (e.g., selected by default, selected by a user, etc.), and N is the number of elements in $\boldsymbol{W}_i^*$. Accordingly, to achieve a sparsity ratio of s%, the threshold may be set by sorting $\boldsymbol{W}_i^*$ (e.g., in ascending order) and selecting the value at the (1 - r/100)th percentile.

In some examples, the systems and methods may include using the product of the complement of the sparsity ratio and N as an index of the sorted weight importance matrix, and using the value of the element of the sorted weight importance matrix that is indexed by the product as the threshold. In some cases, the value of the product of the complement of the sparsity ratio and N can be a decimal (e.g., a fractional value, a floating point, a non-integer). Based on a determination that the product of the complement of the sparsity ratio and N is a decimal value, the systems and methods may round up the product value to a next integer or nearest integer greater than the decimal number. For example, if s = 50% and N = 9, then the product of the complement of the sparsity ratio and N is (1-50/100) × 9 = (0.5) × 9 = 4.5. Accordingly, the systems and methods may round up the product 4.5 to the next highest whole number, which is 5. The systems and methods may then use the product value as the index of the sorted weight importance matrix.

For a given dataset i, a pruning mask $M_i$ of a given layer and the pruned weight matrix $W_i^p$ for that layer may be determined as follows:

$$\mathcal{M}_i = \mathcal{I}(\mathbf{W}_i^* < \mathcal{T}_s) = \begin{cases} 0 & \text{if } \mathbf{w}_i^* < \mathcal{T}_s, \mathbf{w}_i^* \in \mathbf{W}_i^* \\ 1 & \text{otherwise.} \end{cases}$$

$$\mathbf{W}_i^p = \mathbf{W}_i \cdot \mathcal{M}_i.$$

where $\mathcal{I}$ is an indicator function, $W_i^*$ is the weight importance matrix, $T_s$ is a weight pruning threshold, and $w_i^*$ is an element of the weight importance matrix $W_i^*$. It is noted that the threshold $T_s$ may be determined based on a sparsity ratio.

Upon transitioning from dataset i to dataset i + 1, the pruning mechanism may start with $W_{i+1} = W^p_i$ as the initial weight matrix. This initial weight matrix may already have a set of pruned (zeroed-out) weights. These zeroed weights may have a $W^*_{i+1}$ of nearly zero for the new dataset i + 1 due to their minimal influence. Mask $M_{i+1}$ may be determined as follows:

$$\mathcal{M}_{i+1} = \mathcal{I}\left(\mathbf{W}_{i+1}^* < \mathcal{T}_s\right)$$
$$= \mathcal{I}(|\mathbf{W}_{i+1} \cdot \mathcal{R}_{i+1}| < \mathcal{T}_s)$$
$$= \mathcal{I}(|(\mathbf{W}_i \cdot \mathcal{M}_i) \cdot \mathcal{R}_{i+1}| < \mathcal{T}_s)$$
$$= \mathcal{I}(|\mathbf{W}_i \cdot \mathcal{R}_{i+1}| \cdot |\mathcal{M}_i| < \mathcal{T}_s)$$

$$= \begin{cases} 0 & \text{if } m < \mathcal{T}_s, m \in |\mathbf{W}_i \cdot \mathcal{R}_{i+1}| \cdot |\mathcal{M}_i| \\ 1 & \text{otherwise.} \end{cases}$$

$$= \mathcal{M}_i,$$

$$\mathbf{W}_{i+2} = \mathbf{W}_{i+1} = \mathbf{W}_i \cdot \mathcal{M}_i.$$

Since the masked weights $w_{i+1}^*$ are zero for the previously pruned weights ($\mathbf{W}_i$), these weights will again fall below the new threshold and remain pruned, regardless of the new dataset i + 1. Therefore, $W_{i+1}^p$ being equal to $W_i^p$ freezes or maintains these weights when transitioning to a new dataset. leading to the phenomenon of "weight stasis." Weight stasis can result in path dependency, limiting an AI model's ability to adapt to new datasets while adopting calibration-guided pruning strategies to this domain. This is also observed from the experimental results as shown in Table 1.

In the context of calibration-guided pruning strategies, a rigorous mathematical justification is necessary to explain the transition of the inequality to the binary mask $\mathbf{M}_i$. A formal argument may be used to elucidate this phenomenon. Starting from an inequality that can govern the pruning process:

$$|\mathbf{W}_i \cdot R| \cdot |M_i| < T_s,$$

where the term $|\mathbf{W}_i \cdot R|$ may be interpreted as the absolute scaled weight matrix, where $\mathbf{W}_i$ is the weight matrix at iteration $i$, and R is a ranking matrix based on some selected criterion. The matrix $\mathbf{M}_i$ can be defined as a binary mask where:

$$\mathcal{M}_i = \begin{cases} 1 & \text{if } |w_i^*| \geq \mathcal{T}_s \\ 0 & \text{if } |w_i^*| < \mathcal{T}_s \end{cases}$$

Here, $w_i^*$ may represent the scaled weights $|\mathbf{W}_i \cdot R|$, indicating the importance of each element of a given weight matrix). Thus, $M_i$ may be a result of applying the thresholding function on the scaled weights. In some cases, this mask may capture the pruning condition for every individual weight. For the transition to $M_i$, the element-wise product of the scaled weights and the mask may be determined as follows:

$$|\mathbf{W}_i \cdot \mathcal{R}| \cdot |\mathcal{M}_i| = \begin{cases} |w_i^*| & \text{if } |w_i^*| \geq \mathcal{T}_s \\ 0 & \text{if } |w_i^*| < \mathcal{T}_s \end{cases}$$

As per the definition of $M_i$, any weight for which the scaled value is less than the threshold $T_s$ is zero (e.g., has already been set to zero). Therefore, the product may be zero for all weights that do not meet the threshold criterion. Given the above, the inequality reduces to an identity involving $M_i$ since:

$$|\mathbf{W}_i \cdot \mathrm{R}| \cdot |\mathrm{M}_i| < T_s \Leftrightarrow \mathrm{M}_i$$

Thus, the masked weights $W_i \cdot M_i$ from a prior iteration i inherently satisfy the pruning condition for a subsequent iteration $i + 1$, reinforcing the stasis. This mathematical justification solidifies the understanding of weight stasis as a result of continual pruning, where the pruned weights ($\mathbf{W}_i \cdot M_i$) maintain their zeroed state during iterative dataset transitions.

It is noted that the size of the mask matrix may match the size of the weight importance matrix and/or match the size of the weight matrix. As described herein, variations in inpu.ts to a given function may be included in an input variation matrix. The variations in the weights of the AI model may be included in a weight variation matrix. In some cases, a size of the weight variation matrix may match a size of the weight matrix and/or a size of the input variation matrix. In some cases, the weight variation matrix may be a full rank matrix. An example of a 3x3 importance weight matrix $W_i^*$ may include the following values:

$$\begin{matrix} 2 & 5 & 9 \\ 4 & 1 & 8 \\ 7 & 6 & 3 \end{matrix}$$

Accordingly, converting $W_i^*$ into a 9-element sequence and sorting it ascending order gives Sorted $W_i^* = [1, 2, 3, 4, 5, 6, 7, 8, 9]$. Based on $s = 50\%$ and $N = 9$, then $[(1 - s/100) \times N] = 4.5$, which is rounded up to 5. This value 5 is then used as an index on Sorted $W_i^*$. The first element of Sorted $W_i^*$ "1" may be indexed by [0], the second element "2" may be indexed by [1], and so forth. Thus, $T_s$ = Sorted $W_i^*$ [5] = 6. In some cases, the first element of Sorted $W_i^*$ "1" may be indexed by [1], the second element "2" may be indexed by [2], and so forth, giving $T_s$ = Sorted $W_i^*$ [5] = 5.

Based on the provided examples, weight pruning mask M; may be generated using 6 as the threshold value of elements of $W_i^*$. Based on the mask equations provided herein, any value of an element of $W_i^*$ that is greater than or equal to the threshold $T_s$ of 6 corresponds to a 1 in the mask matrix. Any value of an element of $W_i^*$ that is less than the threshold $T_s$ of 6 corresponds to a 0 in the mask matrix. Accordingly, the pruning mask matrix may be generated as follows:

$$\begin{matrix} 0 & 0 & 1 \\ 0 & 0 & 1 \\ 1 & 1 & 0 \end{matrix}$$

Example values of each element of the weight matrix $\mathbf{W}_i$ may be as follows:

$$\begin{matrix} 0.6 & 1.1 & 0.3 \\ 1.2 & 0.7 & 1.0 \\ 1.3 & 0.1 & 0.2 \end{matrix}$$

Applying the mask to the weights based on the dot product $\mathbf{M}_i \cdot \mathbf{W}_i$ gives the following pruned matrix:

$$\begin{matrix} 0 & 0 & 0.3 \\ 0 & 0 & 1.0 \\ 1.3 & 0.1 & 0 \end{matrix}$$

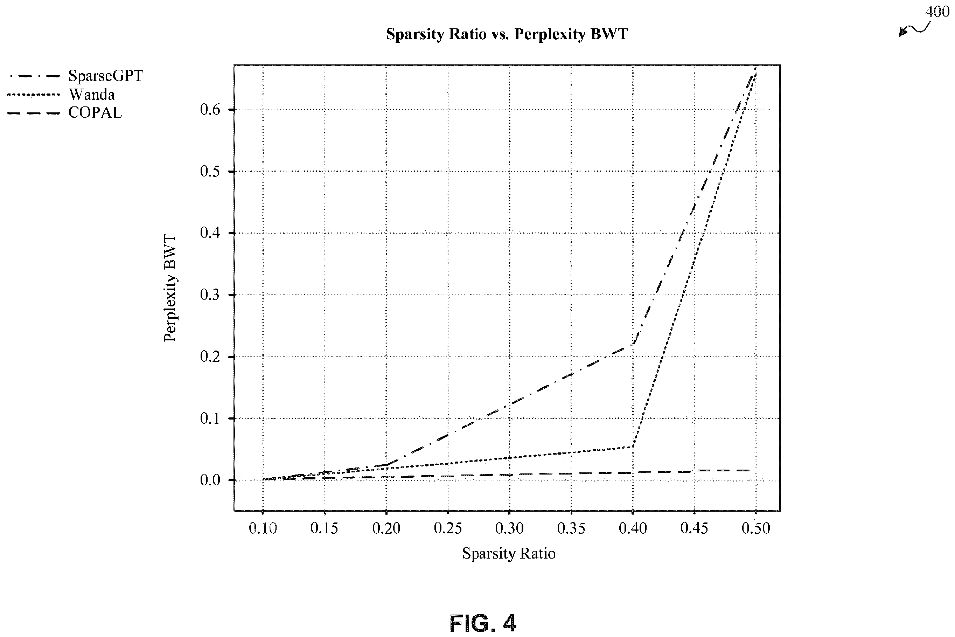

**FIG. 4** illustrates an example graph 400 in accordance with one or more implementations as described herein.

The results of graph 400 may be based on determining perplexity in relation to the performance of LLM models. As shown, the LLM models include SparseGPT, Wanda, and COntinual Pruning in Adaptive Language (COPAL). The perplexity in relation to the performance of LLM models may be determined based on the following:

$$\mathbf{P}_{\pi}^{i,j} = \frac{1}{M} \sum_{e=1}^{M} \exp\left(-\sum_{c=1}^{N_e} \log(p(\mathbf{w}_c^e | \mathbf{w}_{1:c}^{\mathbf{e}}))\right)$$

It is noted that perplexity refers to a measure used to assess how well a probability model predicts a sample. Perplexity can indicate how well a given probability model or language model predicts a specific dataset.

The systems and methods described herein may include and/or may be based on backward transfer (BWT). BWT may indicate the influence that learning a task t has on the performance on a previous task k. Positive backward transfer may occur when learning about some task t increases the performance on some preceding task k. Negative backward transfer may occur when learning about some task t decreases the performance on some preceding task k. Relatively large negative backward transfer may be referred to catastrophic forgetting.

In the illustrated example, backward transfer is used for evaluation of continual learning performance. The backward transfer (BWT) may be determined based on perplexity according to the following:

$$\mathrm{BWT}_{\pi}^{i,j} = \left(\mathbf{P}_{\pi}^{i,j} - \mathbf{P}_{\pi}^{j,j}\right)$$

As shown, configuring SparseGPT with 0.4 or 40% sparsity ratio results in a BWT of 0.221 or 22.1%. Configuring Wanda with 40% sparsity ratio results in a BWT of 0.05 or 5%. Configuring the continual pruning systems and methods described herein (e.g., COPAL) with 40% sparsity ratio result in a BWT of 0.003 or 0.3%, significantly less than the BWT of SparseGPT and Wanda.

As shown, configuring SparseGPT with 0.5 or 50% sparsity ratio results in a BWT of 0.591 or 59.1%. Configuring Wanda with 50% sparsity ratio results in a BWT of 0.569 or 56.9%. Configuring the continual pruning systems and methods described herein with 50% sparsity ratio result in a BWT of 0.016 or 1.6%, again significantly less than the BWT of SparseGPT and Wanda.

The illustrated example depicts the average or mean BWT based on a given sparsity ratio for SparseGPT, Wanda, and the continual pruning systems and methods described herein. It is noted that at 50% sparsity ratio, the maximum BWT for SparseGPT may be 0.69 or 69%, the maximum BWT for Wanda may be 1.072 or 107.2%, and the maximum BWT for continual pruning may be 0.032 or 3.2%. Again, the BWT of continual pruning, as described herein, is significantly less than the BWT of SparseGPT and Wanda.

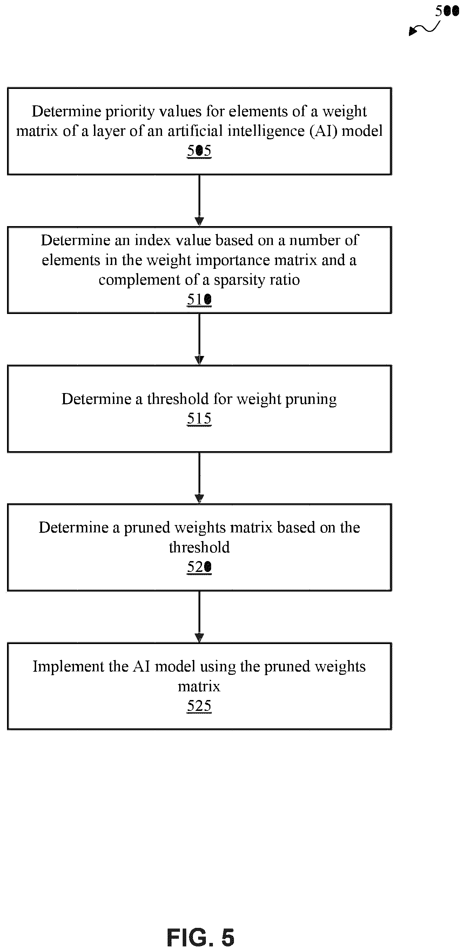

**FIG. 5** depicts a flow diagram illustrating an example method 500 associated with the disclosed systems, in accordance with example implementations described herein. In some configurations, method 500 may be implemented by pruning controller 140 of FIG. 1 and/or pruning controller 230 of FIG. 2. In some configurations, method 500 may be implemented in conjunction with machine 105, components of machine 105, or any combination thereof. The depicted method 500 is just one implementation and one or more operations of method 500 may be rearranged, reordered, omitted, and/or otherwise modified such that other implementations are possible and contemplated.

At 505, method 500 may include determining priority values for elements of a weight matrix of a layer of an artificial intelligence (AI) model. For example, a processor may execute code to determine priority values (e.g., importance values) for elements of a weight matrix of a layer of an AI model where the priority values are based on a gradient of a loss function of the AI model and the weight matrix, and where a weight importance matrix includes the priority values.

At 510, method 500 may include determining an index value based on a number of elements in the weight importance matrix and a complement of a sparsity ratio. For example, a processor may execute code to determine an index value based on a number of elements in the weight importance matrix and a complement of a sparsity ratio.

At 515, method 500 may include determining a threshold for weight pruning. For example, a processor may execute code to determine a threshold based on sorting the elements of the weight importance matrix in sequential order and determining a value of an element of the sorted weight importance matrix based on using the index value as an index of the sorted weight importance matrix.

At 520, method 500 may include determining a pruned weights matrix based on the threshold. For example, a processor may execute code to determine a pruned weights matrix based on the threshold.

At 525, method 500 may include implementing the AI model using the pruned weights matrix. For example, a processor may execute code to implement the AI model using the pruned weights matrix.

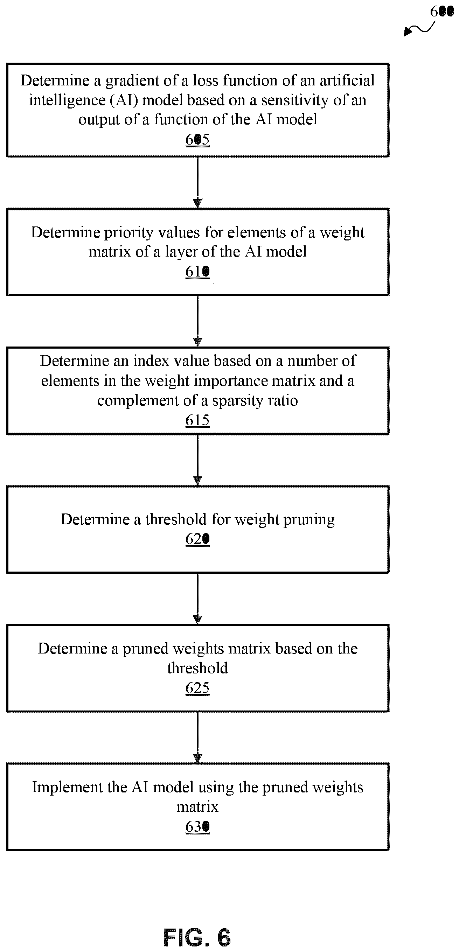

**FIG. 6** depicts a flow diagram illustrating an example method 600 associated with the disclosed systems, in accordance with example implementations described herein. In some configurations, method 600 may be implemented by pruning controller 140 of FIG. 1 and/or pruning controller 230 of FIG. 2. In some configurations, method 600 may be implemented in conjunction with machine 105, components of machine 105, or any combination thereof. The depicted method 600 is just one implementation and one or more operations of method 600 may be rearranged, reordered, omitted, and/or otherwise modified such that other implementations are possible and contemplated.

At 605, method 600 may include determining a gradient of a loss function of an artificial intelligence (AI) model based on a sensitivity of an output of a function of the AI model. For example, a processor may execute code to determine a gradient of a loss function of the AI model based on a sensitivity of an output of a function of the AI model.

At 610, method 600 may include determining priority values for elements of a weight matrix of a layer of an AI model. For example, a processor may execute code to determine priority values (e.g., importance values) for elements of a weight matrix of a layer of an AI model where the priority values are based on the gradient of the loss function of the AI model and the weight matrix, and where a weight importance matrix includes the priority values.

At 615, method 600 may include determining an index value based on a number of elements in the weight importance matrix and a complement of a sparsity ratio. For example, a processor may execute code to determine an index value based on a number of elements in the weight importance matrix and a complement of a sparsity ratio.

At 620, method 600 may include determining a threshold for weight pruning. For example, a processor may execute code to determine a threshold based on sorting the elements of the weight importance matrix in sequential order and determining a value of an element of the sorted weight importance matrix based on using the index value as an index of the sorted weight importance matrix.

At 625, method 600 may include determining a pruned weights matrix based on the threshold. For example, a processor may execute code to determine a pruned weights matrix based on the threshold.

At 630, method 600 may include implementing the AI model using the pruned weights matrix. For example, a processor may execute code to implement the AI model using the pruned weights matrix.

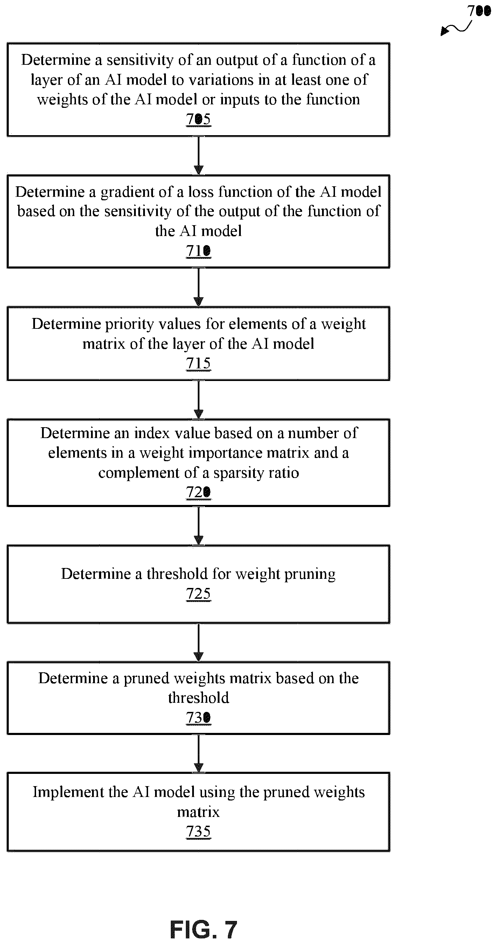

**FIG. 7** depicts a flow diagram illustrating an example method 700 associated with the disclosed systems, in accordance with example implementations described herein. In some configurations, method 700 may be implemented by pruning controller 140 of FIG. 1 and/or pruning controller 230 of FIG. 2. In some configurations, method 700 may be implemented in conjunction with machine 105, components of machine 105, or any combination thereof. The depicted method 700 is just one implementation and one or more operations of method 700 may be rearranged, reordered, omitted, and/or otherwise modified such that other implementations are possible and contemplated.

At 705, method 700 may include determining a sensitivity of an output of a function of a layer of an artificial intelligence (AI) model to variations in at least one of weights of the AI model or inputs to the function. For example, a processor may execute code to obtain a weight matrix of a layer of an AI model, where the weight matrix includes weights of the AI model for the given layer. In some cases, a processor may execute code to determine a sensitivity of an output of a function of a layer of an AI model to variations in at least one of the weights of the AI model or inputs to the function.

At 710, method 700 may include determining a gradient of a loss function of the AI model based on the sensitivity of the output of the function of the AI model. For example, a processor may execute code to determine a gradient of a loss function of the AI model based on a sensitivity of an output of a function of the AI model.

At 715, method 700 may include determining priority values for elements of a weight matrix of a layer of an AI model. For example, a processor may execute code to determine priority values (e.g., importance values) for elements of a weight matrix of a layer of an AI model where the priority values are based on the gradient of the loss function of the AI model and the weight matrix, and where a weight importance matrix includes the priority values.

At 720, method 700 may include determining an index value based on a number of elements in the weight importance matrix and a complement of a sparsity ratio. For example, a processor may execute code to determine an index value based on a number of elements in the weight importance matrix and a complement of a sparsity ratio.

At 725, method 700 may include determining a threshold for weight pruning. For example, a processor may execute code to determine a threshold based on sorting the elements of the weight importance matrix in sequential order and determining a value of an element of the sorted weight importance matrix based on using the index value as an index of the sorted weight importance matrix.

At 730, method 700 may include determining a pruned weights matrix based on the threshold. For example, a processor may execute code to determine a pruned weights matrix based on the threshold.

At 735, method 700 may include implementing the AI model using the pruned weights matrix. For example, a processor may execute code to implement the AI model using the pruned weights matrix.

In the examples described herein, the configurations and operations are example configurations and operations, and may involve various additional configurations and operations not explicitly illustrated. In some examples, one or more aspects of the illustrated configurations and/or operations may be omitted. In some embodiments, one or more of the operations may be performed by components other than those illustrated herein. Additionally, or alternatively, the sequential and/or temporal order of the operations may be varied.

Certain embodiments may be implemented in one or a combination of hardware, firmware, and software. Other embodiments may be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wired and/or wireless communication device such as a switch, router, network interface controller, cellular telephone, smartphone, tablet, netbook, wireless terminal, laptop computer, a femtocell, High Data Rate (HDR) subscriber station, access point, printer, point of sale device, access terminal, or other personal communication system (PCS) device. The device may be wireless, wired, mobile, and/or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to wired and/or wireless communication signals includes transmitting the wired and/or wireless communication signals and/or receiving the wired and/or wireless communication signals. For example, a communication unit, which is capable of communicating wired and/or wireless communication signals, may include a wired/wireless transmitter to transmit communication signals to at least one other communication unit, and/or a wired/wireless communication receiver to receive the communication signal from at least one other communication unit.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Although an example processing system has been described above, embodiments of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more components of computer program instructions, encoded on computer storage medium for execution by, or to control the operation of, information/data processing apparatus. Alternatively, or in addition, the program instructions can be encoded on an artificially-generated propagated signal, for example a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (for example multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, for example an FPGA (field programmable gate array) or an ASIC (application-specific integrated circuit). The apparatus can also include, in addition to hardware, code that creates an execution environment for the computer program in question, for example code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing, and grid computing infrastructures.

A computer program (also known as a program, software, software application, script, or code) can be written in any form of programming language, including compiled or interpreted languages, declarative or procedural languages, and it can be deployed in any form, including as a stand-alone program or as a component, component, subroutine, object, or other unit suitable for use in a computing environment. A computer program may, but need not, correspond to a file in a file system. A program can be stored in a portion of a file that holds other programs or information/data (for example one or more scripts stored in a markup language document), in a single file dedicated to the program in question, or in multiple coordinated files (for example files that store one or more components, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, for example magnetic, magneto-optical disks, or optical disks. However, a computer need not have such devices. Devices suitable for storing computer program instructions and information/data include all forms of non-volatile memory, media, and memory devices, including by way of example semiconductor memory devices, for example EPROM, EEPROM, and flash memory devices; magnetic disks, for example internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, for example a CRT (cathode ray tube) or LCD (liquid crystal display) monitor, for displaying information/data to the user and a keyboard and a pointing device, for example a mouse or a trackball, by which the user can provide input to the computer. Other kinds of devices can be used to provide for interaction with a user as well; for example, feedback provided to the user can be any form of sensory feedback, for example visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, for example as an information/data server, or that includes a middleware component, for example an application server, or that includes a front-end component, for example a client computer having a graphical user interface or a web browser through which a user can interact with an embodiment of the subject matter described herein, or any combination of one or more such back-end, middleware, or front-end components. The components of the system can be interconnected by any form or medium of digital information/data communication, for example a communication network. Examples of communication networks include a local area network ("LAN") and a wide area network ("WAN"), an inter-network (for example the Internet), and peer-to-peer networks (for example ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (for example an HTML page) to a client device (for example for purposes of displaying information/data to and receiving user input from a user interacting with the client device). Information/data generated at the client device (for example a result of the user interaction) can be received from the client device at the server.

While this specification contains many specific embodiment details, these should not be construed as limitations on the scope of any embodiment or of what may be claimed, but rather as descriptions of features specific to particular embodiments. Certain features that are described herein in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain embodiments, multitasking and parallel processing may be advantageous.

Many modifications and other examples as set forth herein will come to mind to one skilled in the art to which these embodiments pertain having the benefit of the teachings presented in the foregoing descriptions and the associated drawings. Therefore, it is to be understood that the embodiments are not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A device comprising:

    one or more processors; and
    memory storing instructions that, when executed by the one or more processors, cause the device to:

        determine priority values for elements of a weight matrix of a layer of an artificial intelligence, AI, model, the priority values being based on a gradient of a loss function of the AI model and the weight matrix, elements of a weight importance matrix comprising the priority values;
        determine an index value based on a number of elements in the weight importance matrix and a sparsity ratio;
        determine a threshold based on sorting the elements of the weight importance matrix in sequential order and determining a value of an element of the sorted weight importance matrix based on using the index value as an index of the sorted weight importance matrix;
        determine a pruned weights matrix based on the threshold; and
        process a query using an updated AI model, the updated AI model being based on the pruned weights matrix being implemented in the AI model.

2. The device of claim 1, wherein determining priority values for elements of the weight matrix is based on the instructions, when executed by the one or more processors, further causing the device to:

    determine a sensitivity of an output of a function of the layer of the AI model to variations in at least one of weights of the AI model or inputs to the function; and
    determine the gradient of the loss function of the AI model based on the sensitivity of the output of the function.

3. The device of claim 2, wherein:

    the variations in inputs to the function are included in an input variation matrix,

the variations in the weights of the AI model are included in a weight variation matrix,
a size of the weight variation matrix matches a size of the weight matrix and a size of the input variation matrix, and
the weight variation matrix is a full rank matrix.

4. The device of claim 2 or 3, wherein, based on the layer being non-linear, the gradient of the loss function is based on a pseudoinverse of the variations in the weights of the AI model.

5. The device of any one of claims 2 to 4, wherein, based on the layer being linear, the gradient of the loss function is based on the inputs to the function.

6. The device of any one of claims 1 to 5, wherein determining the pruned weights matrix based on the threshold is based on the instructions, when executed by the one or more processors, further causing the device to:

   generate a mask matrix based on comparing elements of the weight importance matrix to the threshold; and
   determine the pruned weights matrix based on applying the mask matrix to the weight matrix.

7. The device of claim 6, wherein:

   the weight matrix comprises weights of the layer of the AI model, and
   applying the mask matrix to the weight matrix is based on a dot product of the mask matrix and the weight matrix.

8. The device of any one of claims 1 to 7, wherein the instructions, when executed by the one or more processors, further cause the device to:

   set elements of the weight importance matrix to zero based on the weight pruning being a first iteration, or
   set elements of the weight importance matrix to a second pruned weights matrix based on the weight pruning being a second iteration different from the first iteration.

9. The device of any one of claims 1 to 8, wherein, based on a determination that the index value comprises a decimal number, using the index value as the index of the sorted weight importance matrix is based on the instructions, when executed by the one or more processors, further causing the device to:

   round the index value to a nearest integer greater than the decimal number; and
   use the rounded index value as the index of the sorted weight importance matrix.

10. The device of any one of claims 1 to 9, wherein:

    the AI model or the updated AI model comprises a trained AI model,
    the sparsity ratio is a percentage value between zero percent and one hundred percent, and
    the index value is determined based a complement of the sparsity ratio.

11. A non-transitory computer-readable medium storing code that comprises instructions executable by a processor to:

    determine priority values for elements of a weight matrix of a layer of an artificial intelligence, AI, model, the priority values being based on a gradient of a loss function of the AI model and the weight matrix, elements of a weight importance matrix comprising the priority values;
    determine an index value based on a number of elements in the weight importance matrix and a sparsity ratio;
    determine a threshold based on sorting the elements of the weight importance matrix in sequential order and determining a value of an element of the sorted weight importance matrix based on using the index value as an index of the sorted weight importance matrix;
    determine a pruned weights matrix based on the threshold; and
    process a query using an updated AI model, the updated AI model being based on the pruned weights matrix being implemented in the AI model.

12. The non-transitory computer-readable medium of claim 11, wherein determining priority values for elements of the weight matrix is based on the code further causing the processor to:

    determine a sensitivity of an output of a function of the layer of the AI model to variations in at least one of weights of the AI model or inputs to the function; and
determine the gradient of the loss function of the AI model based on the sensitivity of the output of the function.

13. The non-transitory computer-readable medium of claim 12, wherein:

the variations in inputs to the function are included in an input variation matrix,
the variations in the weights of the AI model are included in a weight variation matrix,
a size of the weight variation matrix matches a size of the weight matrix and a size of the input variation matrix, and
the weight variation matrix is a full rank matrix.

14. The non-transitory computer-readable medium of claim 12 or 13, wherein, based on the layer being non-linear, the gradient of the loss function is based on a pseudoinverse of the variations in the weights of the AI model.

**FIG. 1**

EP 4 571 579 A1

**FIG. 2**

**FIG. 3**

FIG. 4

500

Determine priority values for elements of a weight
matrix of a layer of an artificial intelligence (AI) model
505

Determine an index value based on a number of
elements in the weight importance matrix and a
complement of a sparsity ratio
510

Determine a threshold for weight pruning
515

Determine a pruned weights matrix based on the
threshold
520

Implement the AI model using the pruned weights
matrix
525

FIG. 5

600

Determine a gradient of a loss function of an artificial
intelligence (AI) model based on a sensitivity of an
output of a function of the AI model
605

Determine priority values for elements of a weight
matrix of a layer of the AI model
610

Determine an index value based on a number of
elements in the weight importance matrix and a
complement of a sparsity ratio
615

Determine a threshold for weight pruning
620

Determine a pruned weights matrix based on the
threshold
625

Implement the AI model using the pruned weights
matrix
630

## FIG. 6

700

Determine a sensitivity of an output of a function of a
layer of an AI model to variations in at least one of
weights of the AI model or inputs to the function
705

Determine a gradient of a loss function of the AI model
based on the sensitivity of the output of the function of
the AI model
710

Determine priority values for elements of a weight
matrix of the layer of the AI model
715

Determine an index value based on a number of
elements in a weight importance matrix and a
complement of a sparsity ratio
720

Determine a threshold for weight pruning
725

Determine a pruned weights matrix based on the
threshold
730

Implement the AI model using the pruned weights
matrix
735

**FIG. 7**

## EUROPEAN SEARCH REPORT

**Application Number**

EP 24 21 6795

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XINYIN MA ET AL: "LLM-Pruner: On the Structural Pruning of Large Language Models", ARXIV.ORG, CORNELL UNIVERSITY LIBRARY, 201 OLIN LIBRARY CORNELL UNIVERSITY ITHACA, NY 14853, 19 May 2023 (2023-05-19), XP091512729, * section 3.1 * * section 3.2 * * section 4.1 * * page 6, line 10 - line 11 * * equations (3)-(4) * | 1-14 | INV. G06N3/0455 G06N3/082 |
| A | MINGJIE SUN ET AL: "A Simple and Effective Pruning Approach for Large Language Models", ARXIV.ORG, CORNELL UNIVERSITY LIBRARY, 201 OLIN LIBRARY CORNELL UNIVERSITY ITHACA, NY 14853, 20 June 2023 (2023-06-20), XP091543443, * the whole document * | 1-14 | |

**TECHNICAL FIELDS SEARCHED (IPC)**

G06N

The present search report has been drawn up for all claims

| Place of search | Date of completion of the search | Examiner |
|---|---|---|
| The Hague | 6 April 2025 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)